# EUROPEAN PATENT APPLICATION

(11) **EP 4 020 208 A1**
(43) Date of publication of application: **29.06.2022**
(21) Application number: 21209882.6
(22) Date of filing: 23.11.2021
(51) Int. Cl.: G06F 9/50, G06F 3/06

(54) **MEMORY POOL DATA PLACEMENT TECHNOLOGIES**

(30) Priority: 26.12.2020 US 202063130670 P; 21.09.2021 US 202117480938
(71) Applicant: Intel Corporation, Santa Clara, CA 95054 (US)
(72) Inventor: GUIM BERNAT, Francesc, 08036 Barcelona (ES); KUMAR, Karthik, Chandler, 85249 (US)
(74) Representative: 2SPL Patentanwälte PartG mbB

(57) **Abstract**

Examples described herein relate to a network interface device, when operational, configured to: select data of a region of addressable memory addresses to migrate from a first memory pool to a second memory pool to lower a transit time of the data of the region of addressable memory addresses to a computing platform. In some examples, selecting data of a region of addressable memory addresses to migrate from a first memory pool to a second memory pool is based at least, in part, on one or more of: (a) memory bandwidth used to access the data; (b) latency to access the data from the first memory pool by the computing platform; (c) number of accesses to the data over a window of time by the computing platform; (d) number of accesses to the data over a window of time by other computing platforms over a window of time; (e) historic congestion to and/or from one or more memory pools accessible to the computing platform; and/or (f) number of different computing platforms that access the data.

## Description

### RELATED APPLICATION

The present application claims the benefit of a priority date of U.S. provisional patent application Serial Number 63/130,670, filed December 26, 2020, the entire disclosure of which is incorporated herein by reference.

### BACKGROUND

Rapid proliferation of cloud native usages has resulted in a shift to scale out, distributed software design. For example, an application or service can be executed using a group of microservices and microservices can communicate with other microservices using a network. Many applications involving distributed computing can utilize memory pooling technologies so that applications can access remote objects from remote memory pools. Example applications-involving distributed computing include document indexing, search applications, Hadoop file system (HDFS) operations, among others.

Providing data at or near a platform that executes an application that processes the data can improve the performance of the application as it can reduce time taken to access data. For example, Red Hat Enterprise Linux 7 systems provide for automatic non-uniform memory access (NUMA) balancing whereby processes access memory on a same NUMA node as the processes execute.

### BRIEF DESCRIPTION OF THE DRAWINGS

FIG. 1 is a simplified diagram of at least one example of a data center for executing workloads with disaggregated resources.
FIG. 2 is a simplified diagram of at least one example of a system that may be included in a data center.
FIG. 3 is a simplified block diagram of at least one example of a top side of a node.
FIG. 4 is a simplified block diagram of at least one example of a bottom side of a node.
FIG. 5 is a simplified block diagram of at least one example of a compute node.
FIG. 6 is a simplified block diagram of at least one example of an accelerator node usable in a data center.
FIG. 7 is a simplified block diagram of at least one example of a storage node usable in a data center.
FIG. 8 is a simplified block diagram of at least one example of a memory node usable in a data center.
FIG. 9 depicts a system for executing one or more workloads.
FIG. 10 depicts an example system.
FIG. 11 shows an example system.
FIG. 12 depicts an example scenario.
FIG. 13 depicts an example system.
FIG. 14 depicts an example operation of a system.
FIG. 15 depicts an example process.
FIGs. 16A and 16B depict example switches.
FIG. 17 depicts an example system.

### DETAILED DESCRIPTION

In some examples, a network interface device can select a memory pool from among multiple memory pools hosted in different locations of a data center or different data centers or edge networks in which to store data for access by one or more processes. A memory pool can be selected to store the data based at least in part on data transmission bandwidth through various paths from memory pools, through zero or more switches, to platforms that execute processes that process the data as well physical distances of platforms that execute the processes from memory pools and frequency of access of the data by different processes executed by different platforms. A number of network element hops between a memory pool that stores data and a platform that executes a process that accesses the data can be considered in determining whether to migrate the data and a selected memory pool to store the data can be selected to reduce a number of network element hops. The network interface device can cause data to be copied or moved from a memory pool to a selected memory pool and can redirect memory access requests (e.g., read or write) for the data to the selected memory pool. In some examples, less than an entirety of the data can be migrated to the selected memory pool. Memory access requests can be redirected in some examples while the data is being migrated or copied to the selected memory pool. The network interface device can notify a software stack after the data has been migrated to the selected memory pool so that other requests for the data can be made to the selected memory pool by updating memory management schemes such as page tables, memory managers, and so forth. In some cases, the network interface device can provide a read-only copy of the data from a memory pool into a memory device in a platform that executes a process that accesses the data and the process can access the data from the memory device in the platform.

In some examples, the network interface device can perform predictive migration with use of predictive indicators and past learning to anticipate that one or more paths through network elements to the data at a memory pool are expected to become congested. Based on a prediction of congestion, the network interface device can migrate data to a selected memory pool to reduce data transit time from a memory pool to the platform that requests the data, where the memory pool can be accessed via an uncongested path, a congested path that is expected to take less time to transmit data and/or a memory access request associated with the data, or even a path that uses more hops between the requester and the memory pool.

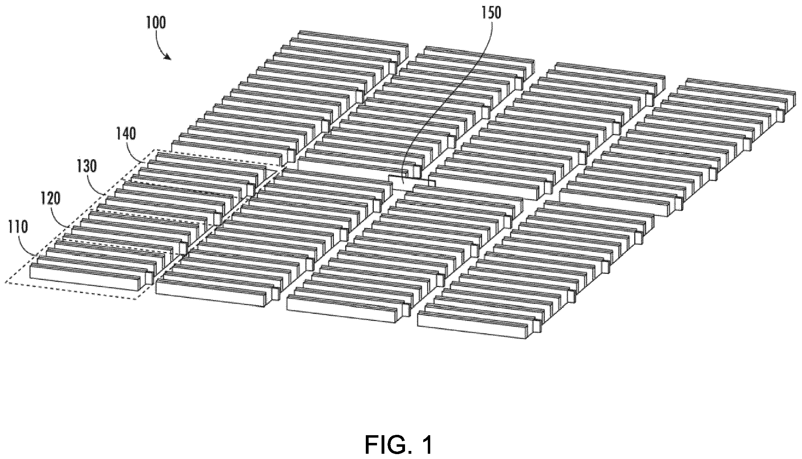

FIG. 1 depicts a data center in which disaggregated resources may cooperatively execute one or more workloads (e.g., applications on behalf of customers) that includes multiple systems 110, 120, 130, 140, a system being or including one or more rows of racks or trays. Of course, although data center 100 is shown with multiple systems, in some examples, the data center 100 may be embodied as a single system. As described in more detail herein, a rack houses multiple nodes, some of which may be equipped with one or more types of resources (e.g., memory devices, data storage devices, accelerator devices, general purpose processors, GPUs, xPUs, CPUs, field programmable gate arrays (FPGAs), or application-specific integrated circuits (ASICs)). Resources can be logically coupled or aggregated to form a composed node, which can act as, for example, a server to perform a job, workload or microservices.

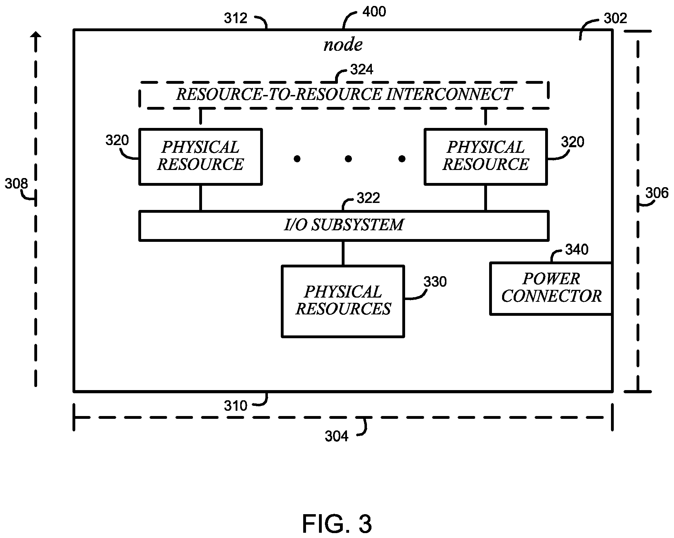

Various examples described herein can perform an application composed of microservices, where a microservice runs in its own process and communicates using protocols (e.g., application program interface (API), a Hypertext Transfer Protocol (HTTP) resource API, message service, remote procedure calls (RPC), or Google RPC (gRPC)). Microservices can be independently deployed using centralized management of these services. The management system may be written in different programming languages and use different data storage technologies. A microservice can be characterized by one or more of: use of fine-grained interfaces (to independently deployable services), polyglot programming (e.g., code written in multiple languages to capture additional functionality and efficiency not available in a single language), or lightweight container or virtual machine deployment, and decentralized continuous microservice delivery. One or more microservices can execute on or using any resources described herein, such as resources of FIGs. 3-11.

In the illustrative example, the nodes in systems 110, 120, 130, 140 are connected to multiple system switches (e.g., switches that route data communications to and from nodes within the system). Switches can be positioned at the top of rack (TOR), end of row (EOR), middle of rack (MOR), or other. The system switches, in turn, connect with spine switches 150 that switch communications among systems (e.g., the systems 110, 120, 130, 140) in the data center 100. In some examples, the nodes may be connected with a fabric using standards described herein or proprietary standards. In other examples, the nodes may be connected with other fabrics, such as InfiniBand or Ethernet or optical. As described in more detail herein, resources within nodes in the data center 100 may be allocated to a group (referred to herein as a "managed node") containing resources from one or more nodes to be collectively utilized in the execution of a workload. The workload can execute as if the resources belonging to the managed node were located on the same node. The resources in a managed node may belong to nodes belonging to different racks, and even to different systems 110, 120, 130, 140. As such, some resources of a single node may be allocated to one managed node while other resources of the same node are allocated to a different managed node (e.g., one processor assigned to one managed node and another processor of the same node assigned to a different managed node).

The disaggregation of resources to nodes comprised predominantly of a single type of resource (e.g., compute nodes comprising primarily compute resources, memory nodes containing primarily memory resources), and the selective allocation and deallocation of the disaggregated resources to form a managed node assigned to execute a workload improves the operation and resource usage of the data center 100 relative to typical data centers comprised of hyperconverged servers containing compute, memory, storage and perhaps additional resources. For example, because nodes predominantly contain resources of a particular type, resources of a given type can be upgraded independently of other resources. Additionally, because different resource types (processors, memory, storage, accelerators, etc.) typically have different refresh rates, greater resource utilization, and reduced total cost of ownership may be achieved. For example, a data center operator can upgrade the processors throughout their facility by only swapping out the compute nodes. In such a case, accelerator and storage resources may not be contemporaneously upgraded and, rather, may be allowed to continue operating until those resources are scheduled for their own refresh. Resource utilization may also increase. For example, if managed nodes are composed based on requirements of the workloads that will be running on them, resources within a node are more likely to be fully utilized. Such utilization may allow for more managed nodes to run in a data center with a given set of resources, or for a data center expected to run a given set of workloads, to be built using fewer resources.

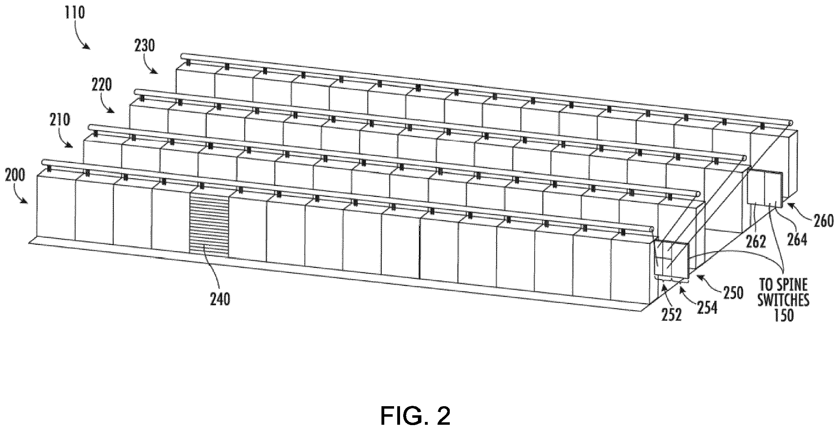

FIG. 2 depicts a system. A system can include a set of rows 200, 210, 220, 230 of racks 240. Rack 240 may house multiple nodes (e.g., sixteen nodes) and provide power and data connections to the housed nodes, as described in more detail herein. In the illustrative example, the racks in rows 200, 210, 220, 230 are connected to multiple system switches 250, 260. The system switch 250 includes a set of ports 252 to which the nodes of the racks of the system 110 are connected and another set of ports 254 that connect the system 110 to the spine switches 150 to provide connectivity to other systems in the data center 100. Similarly, the system switch 260 includes a set of ports 262 to which the nodes of the racks of the system 110 are connected and a set of ports 264 that connect the system 110 to the spine switches 150. As such, the use of the pair of switches 250, 260 provides an amount of redundancy to the system 110. For example, if either of the switches 250, 260 fails, the nodes in the system 110 may still maintain data communication with the remainder of the data center 100 (e.g., nodes of other systems) through the other switch 250, 260. Furthermore, in the illustrative example, the switches 150, 250, 260 may be embodied as dual-mode optical switches, capable of routing both Ethernet protocol communications carrying Internet Protocol (IP) packets and communications according to a second, high-performance link-layer protocol (e.g., PCI Express or Compute Express Link) via optical signaling media of an optical fabric.

It should be appreciated that the other systems 120, 130, 140 (as well as additional systems of the data center 100) may be similarly structured as, and have components similar to, the system 110 shown in and described in regard to FIG. 2 (e.g., a system may have rows of racks housing multiple nodes as described above). Additionally, while two system switches 250, 260 are shown, it should be understood that in other examples, systems 110, 120, 130, 140 may be connected to a different number of system switches, providing even more failover capacity. Of course, in other examples, systems may be arranged differently than the rows-of-racks configuration shown in FIGS. 1-2. For example, a system may be embodied as multiple sets of racks in which a set of racks is arranged radially, e.g., the racks are equidistant from a center switch.

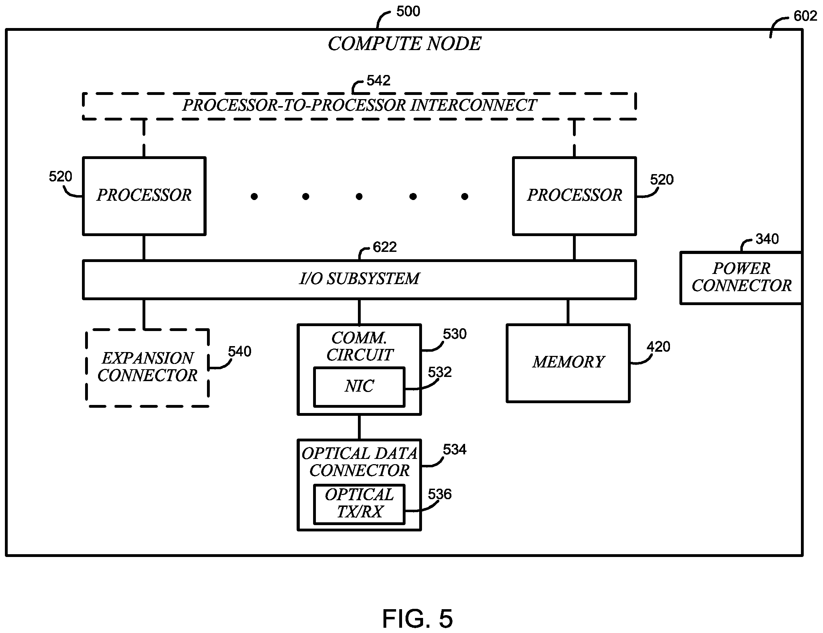

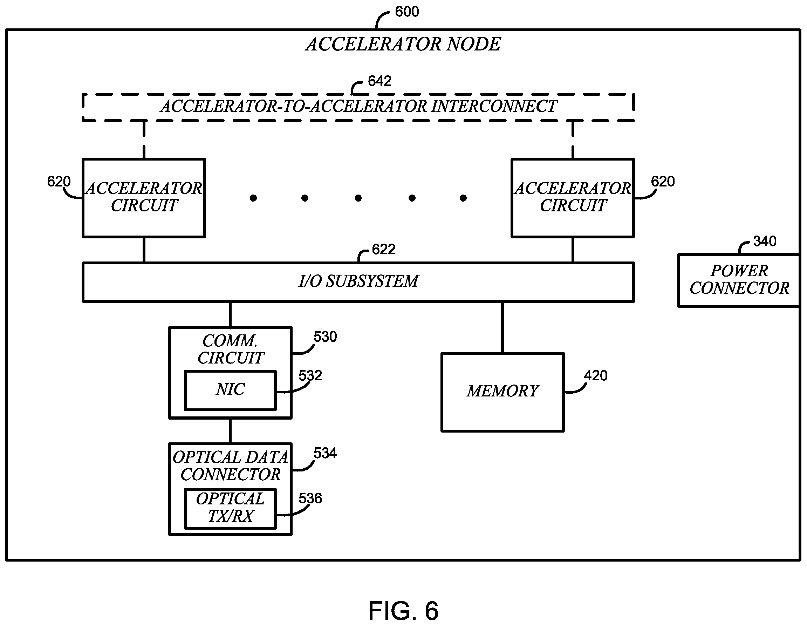

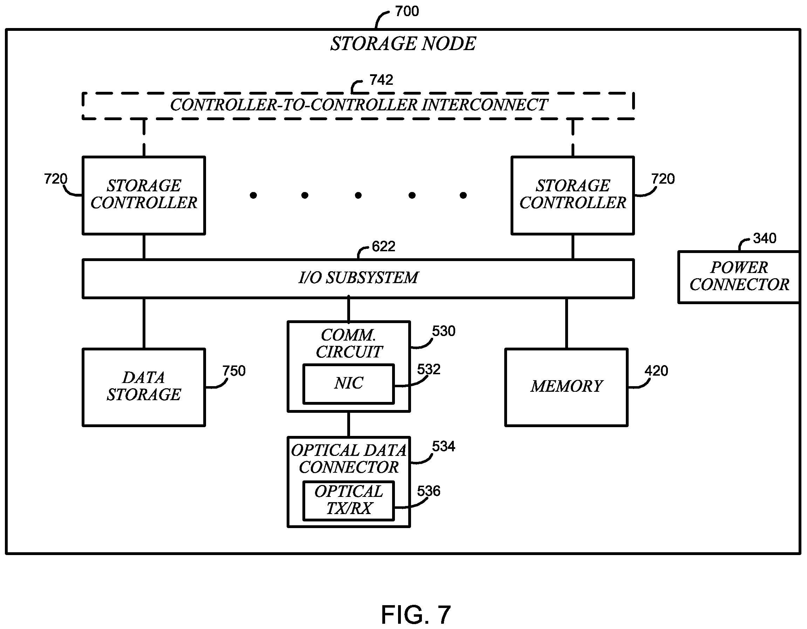

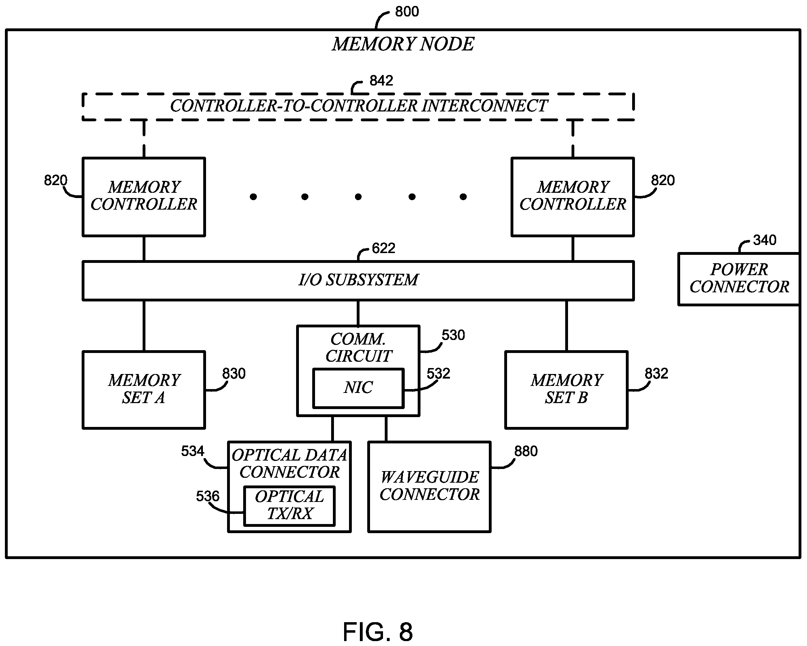

Referring now to FIG. 3, node 400, in the illustrative example, is configured to be mounted in a corresponding rack 240 of the data center 100 as discussed above. In some examples, node 400 may be optimized or otherwise configured for performing particular tasks, such as compute tasks, acceleration tasks, data storage tasks, etc. For example, the node 400 may be embodied as a compute node 500 as discussed below in regard to FIG. 5, an accelerator node 600 as discussed below in regard to FIG. 6, a storage node 700 as discussed below in regard to FIGS. 7, or as a node optimized or otherwise configured to perform other specialized tasks, such as a memory node 800, discussed below in regard to FIG. 8. For example, one or more microservices can execute on or using node 400, node 500, accelerator node 600, storage node 700, and/or memory node 800. As described herein, a storage node 700 or memory node 800 can be selected to store data for access by node 400, node 500, or accelerator node 600 to reduce a transit time of data to meet applicable service level agreement (SLA) parameters.

Although two physical resources 320 are shown in FIG. 3, it should be appreciated that the node 400 may include one, two, or more physical resources 320 in other examples. The physical resources 320 may be embodied as any type of processor, controller, or other compute circuit capable of performing various tasks such as compute functions and/or controlling the functions of the node 400 depending on, for example, the type or intended functionality of the node 400. For example, as discussed in more detail below, the physical resources 320 may be embodied as high-performance processors in examples in which the node 400 is embodied as a compute node, as accelerator co-processors or circuits in examples in which the node 400 is embodied as an accelerator node, storage controllers in examples in which the node 400 is embodied as a storage node, or a set of memory devices in examples in which the node 400 is embodied as a memory node.

The node 400 also includes one or more additional physical resources 330 mounted to circuit board substrate 302. In the illustrative example, the additional physical resources include a network interface controller (NIC) as discussed in more detail below. Of course, depending on the type and functionality of the node 400, the physical resources 330 may include additional or other electrical components, circuits, and/or devices in other examples.

The physical resources 320 can be communicatively coupled to the physical resources 330 via an input/output (I/O) subsystem 322. The I/O subsystem 322 may be embodied as circuitry and/or components to facilitate input/output operations with the physical resources 320, the physical resources 330, and/or other components of the node 400. For example, the I/O subsystem 322 may be embodied as, or otherwise include, memory controller hubs, input/output control hubs, integrated sensor hubs, firmware devices, communication links (e.g., point-to-point links, bus links, wires, cables, waveguides, light guides, printed circuit board traces, etc.), and/or other components and subsystems to facilitate the input/output operations. In the illustrative example for memory system, the I/O subsystem 322 is embodied as, or otherwise includes, a double data rate 4 (DDR4) data bus or a DDR5 data bus.

In some examples, the node 400 may also include a resource-to-resource interconnect 324. The resource-to-resource interconnect 324 may be embodied as any type of communication interconnect capable of facilitating resource-to-resource communications. In the illustrative example, the resource-to-resource interconnect 324 is embodied as a high-speed point-to-point interconnect (e.g., faster than the I/O subsystem 322). For example, the resource-to-resource interconnect 324 may be embodied as a QuickPath Interconnect (QPI), an UltraPath Interconnect (UPI), PCI express (PCIe), Compute Express Link (CXL), or other high-speed point-to-point interconnect utilized for resource-to-resource communications.

The node 400 also includes a power connector 340 configured to mate with a corresponding power connector of the rack 240 when the node 400 is mounted in the corresponding rack 240. The node 400 receives power from a power supply of the rack 240 via the power connector 340 to supply power to the various electrical components of the node 400. In some examples, the node 400 includes local power supply (e.g., an on-board power supply) to provide power to the electrical components of the node 400. In some examples, the node 400 does not include any local power supply (e.g., an on-board power supply) to provide power to the electrical components of the node 400.

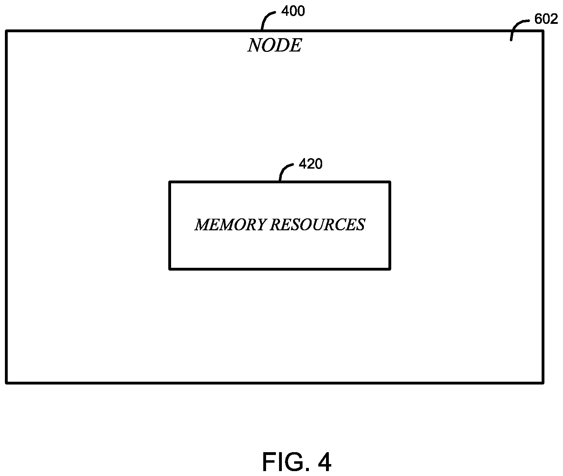

Referring now to FIG. 4, in addition to the physical resources 330 mounted on circuit board substrate 302, the node 400 also includes one or more memory devices 420. The physical resources 320 can be communicatively coupled to memory devices 420 via the I/O subsystem 322. For example, the physical resources 320 and the memory devices 420 may be communicatively coupled by one or more vias extending through the circuit board substrate 302. A physical resource 320 may be communicatively coupled to a different set of one or more memory devices 420 in some examples. Alternatively, in other examples, physical resource 320 may be communicatively coupled to memory device 420.

The memory devices 420 may be embodied as any type of memory device capable of storing data for the physical resources 320 during operation of the node 400, such as any type of volatile (e.g., dynamic random access memory (DRAM), etc.) or non-volatile memory.

In one example, the memory device is a block addressable memory device, such as those based on NAND or NOR technologies, for example, multi-threshold level NAND flash memory and NOR flash memory. A block can be any size such as but not limited to 2KB, 4KB, 5KB, and so forth. A memory device may also include next-generation nonvolatile devices, such as Intel Optane^{®} memory or other byte addressable write-in-place nonvolatile memory devices (e.g., memory devices that use chalcogenide glass), multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of one or more of the above, or other memory. The memory device may refer to the die itself and/or to a packaged memory product. In some examples, the memory device may comprise a transistor-less stackable cross point architecture in which memory cells sit at the intersection of word lines and bit lines and are individually addressable and in which bit storage is based on a change in bulk resistance.

Referring now to FIG. 5, in some examples, the node 400 may be embodied as a compute node 500. The compute node 500 can be configured to perform compute tasks. Of course, as discussed above, the compute node 500 may rely on other nodes, such as acceleration nodes and/or storage nodes, to perform compute tasks. In the illustrative compute node 500, the physical resources 320 are embodied as processors 520. Although only two processors 520 are shown in FIG. 5, it should be appreciated that the compute node 500 may include additional processors 520 in other examples. Illustratively, the processors 520 are embodied as high-performance processors 520 and may be configured to operate at a relatively high power rating.

In some examples, the compute node 500 may also include a processor-to-processor interconnect 542. Processor-to-processor interconnect 542 may be embodied as any type of communication interconnect capable of facilitating processor-to-processor interconnect 542 communications. In the illustrative example, the processor-to-processor interconnect 542 is embodied as a high-speed point-to-point interconnect (e.g., faster than the I/O subsystem 322). For example, the processor-to-processor interconnect 542 may be embodied as a QuickPath Interconnect (QPI), an UltraPath Interconnect (UPI), or other high-speed point-to-point interconnect utilized for processor-to-processor communications (e.g., PCIe or CXL).

The compute node 500 also includes a communication circuit 530. The illustrative communication circuit 530 includes a network interface controller (NIC) 532, which may also be referred to as a host fabric interface (HFI). The NIC 532 may be embodied as, or otherwise include, any type of integrated circuit, discrete circuits, controller chips, chipsets, add-in-boards, daughtercards, network interface cards, or other devices that may be used by the compute node 500 to connect with another compute device (e.g., with other nodes 400). In some examples, the NIC 532 may be embodied as part of a system-on-a-chip (SoC) that includes one or more processors, or included on a multichip package that also contains one or more processors. In some examples, the NIC 532 may include a local processor (not shown) and/or a local memory (not shown) that are both local to the NIC 532. In such examples, the local processor of the NIC 532 may be capable of performing one or more of the functions of the processors 520. Additionally or alternatively, in such examples, the local memory of the NIC 532 may be integrated into one or more components of the compute node at the board level, socket level, chip level, and/or other levels. In some examples, a network interface includes a network interface controller or a network interface card. In some examples, a network interface can include one or more of a network interface controller (NIC) 532, a host fabric interface (HFI), a host bus adapter (HBA), network interface connected to a bus or connection (e.g., PCIe, CXL, DDR, and so forth). In some examples, a network interface can be part of a switch or a system-on-chip (SoC).

Some examples of a NIC 532 are part of an Infrastructure Processing Unit (IPU) or data processing unit (DPU) or utilized by an IPU or DPU. An IPU or DPU can include a network interface, memory devices, and one or more programmable or fixed function processors (e.g., CPU or XPU) to perform offload of operations that could have been performed by a host CPU or XPU or remote CPU or XPU. In some examples, the IPU or DPU can perform virtual switch operations, manage storage transactions (e.g., compression, cryptography, virtualization), and manage operations performed on other IPUs, DPUs, servers, or devices.

The communication circuit 530 is communicatively coupled to an optical data connector 534. The optical data connector 534 is configured to mate with a corresponding optical data connector of a rack when the compute node 500 is mounted in the rack. Illustratively, the optical data connector 534 includes a plurality of optical fibers which lead from a mating surface of the optical data connector 534 to an optical transceiver 536. The optical transceiver 536 is configured to convert incoming optical signals from the rack-side optical data connector to electrical signals and to convert electrical signals to outgoing optical signals to the rack-side optical data connector. Although shown as forming part of the optical data connector 534 in the illustrative example, the optical transceiver 536 may form a portion of the communication circuit 530 in other examples.

In some examples, the compute node 500 may also include an expansion connector 540. In such examples, the expansion connector 540 is configured to mate with a corresponding connector of an expansion circuit board substrate to provide additional physical resources to the compute node 500. The additional physical resources may be used, for example, by the processors 520 during operation of the compute node 500. The expansion circuit board substrate may be substantially similar to the circuit board substrate 302 discussed above and may include various electrical components mounted thereto. The particular electrical components mounted to the expansion circuit board substrate may depend on the intended functionality of the expansion circuit board substrate. For example, the expansion circuit board substrate may provide additional compute resources, memory resources, and/or storage resources. As such, the additional physical resources of the expansion circuit board substrate may include, but is not limited to, processors, memory devices, storage devices, and/or accelerator circuits including, for example, field programmable gate arrays (FPGA), application-specific integrated circuits (ASICs), security co-processors, graphics processing units (GPUs), machine learning circuits, or other specialized processors, controllers, devices, and/or circuits. Note that reference to GPU or CPU herein can in addition or alternatively refer to an XPU or xPU. An xPU can include one or more of: a GPU, ASIC, FPGA, or accelerator device.

Referring now to FIG. 6, in some examples, the node 400 may be embodied as an accelerator node 600. The accelerator node 600 is configured to perform specialized compute tasks, such as machine learning, encryption, hashing, or other computational-intensive task. In some examples, for example, a compute node 500 may offload tasks to the accelerator node 600 during operation. The accelerator node 600 includes various components similar to components of the node 400 and/or compute node 500, which have been identified in FIG. 6 using the same reference numbers.

In the illustrative accelerator node 600, the physical resources 320 are embodied as accelerator circuits 620. Although only two accelerator circuits 620 are shown in FIG. 6, it should be appreciated that the accelerator node 600 may include additional accelerator circuits 620 in other examples. The accelerator circuits 620 may be embodied as any type of processor, coprocessor, compute circuit, or other device capable of performing compute or processing operations. For example, the accelerator circuits 620 may be embodied as, for example, central processing units, cores, field programmable gate arrays (FPGA), application-specific integrated circuits (ASICs), programmable control logic (PCL), security co-processors, graphics processing units (GPUs), neuromorphic processor units, quantum computers, machine learning circuits, programmable processing pipeline (e.g., programmable by P4, C, Python, Broadcom Network Programming Language (NPL), or x86 compatible executable binaries or other executable binaries). Processors, FPGAs, other specialized processors, controllers, devices, and/or circuits can be used utilized for packet processing or packet modification. Ternary content-addressable memory (TCAM) can be used for parallel match-action or look-up operations on packet header content.

In some examples, the accelerator node 600 may also include an accelerator-to-accelerator interconnect 642. Similar to the resource-to-resource interconnect 324 of the node 300 discussed above, the accelerator-to-accelerator interconnect 642 may be embodied as any type of communication interconnect capable of facilitating accelerator-to-accelerator communications. In the illustrative example, the accelerator-to-accelerator interconnect 642 is embodied as a high-speed point-to-point interconnect (e.g., faster than the I/O subsystem 322). For example, the accelerator-to-accelerator interconnect 642 may be embodied as a QuickPath Interconnect (QPI), an UltraPath Interconnect (UPI), or other high-speed point-to-point interconnect utilized for accelerator-to-accelerator communications. In some examples, the accelerator circuits 620 may be daisy-chained with a primary accelerator circuit 620 connected to the NIC 532 and memory 420 through the I/O subsystem 322 and a secondary accelerator circuit 620 connected to the NIC 532 and memory 420 through a primary accelerator circuit 620.

Referring now to FIG. 7, in some examples, the node 400 may be embodied as a storage node 700. The storage node 700 is configured in some examples to store data in a data storage 750 local to the storage node 700. For example, during operation, a compute node 500 or an accelerator node 600 may store and retrieve data from the data storage 750 of the storage node 700. The storage node 700 includes various components similar to components of the node 400 and/or the compute node 500, which have been identified in FIG. 7 using the same reference numbers.

In the illustrative storage node 700, the physical resources 320 are embodied as storage controllers 720. Although only two storage controllers 720 are shown in FIG. 7, it should be appreciated that the storage node 700 may include additional storage controllers 720 in other examples. The storage controllers 720 may be embodied as any type of processor, controller, or control circuit capable of controlling the storage and retrieval of data into/from the data storage 750 based on requests received via the communication circuit 530 or other components. In the illustrative example, the storage controllers 720 are embodied as relatively low-power processors or controllers.

In some examples, the storage node 700 may also include a controller-to-controller interconnect 742. Similar to the resource-to-resource interconnect 324 of the node 400 discussed above, the controller-to-controller interconnect 742 may be embodied as any type of communication interconnect capable of facilitating controller-to-controller communications. In the illustrative example, the controller-to-controller interconnect 742 is embodied as a high-speed point-to-point interconnect (e.g., faster than the I/O subsystem 322). For example, the controller-to-controller interconnect 742 may be embodied as a QuickPath Interconnect (QPI), an UltraPath Interconnect (UPI), or other high-speed point-to-point interconnect utilized for controller-to-controller communications.

Referring now to FIG. 8, in some examples, the node 400 may be embodied as a memory node 800. The memory node 800 is configured to provide other nodes 400 (e.g., compute nodes 500, accelerator nodes 600, etc.) with access to a pool of memory (e.g., in two or more sets 830, 832 of memory devices 420) local to the storage node 700. Also, additional external memory sets can be facilitated using communication circuit 530 and memory sets on memory node(s) located in other physical nodes (not shown). For example, during operation, a compute node 500 or an accelerator node 600 may remotely write to and/or read from one or more of the memory sets 830, 832 of the memory node 800 using a logical address space that maps to physical addresses in the memory sets 830, 832.

In the illustrative memory node 800, the physical resources 320 are embodied as memory controllers 820. Although only two memory controllers 820 are shown in FIG. 8, it should be appreciated that the memory node 800 may include additional memory controllers 820 in other examples. The memory controllers 820 may be embodied as any type of processor, controller, or control circuit capable of controlling the writing and reading of data into the memory sets 830, 832 based on requests received via the communication circuit 530. In the illustrative example, memory controller 820 is connected to a corresponding memory set 830, 832 to write to and read from memory devices 420 within the corresponding memory set 830, 832 and enforce a permissions (e.g., read, write, etc.) associated with node 400 that has sent a request to the memory node 800 to perform a memory access operation (e.g., read or write).

In some examples, the memory node 800 may also include a controller-to-controller interconnect 842. Similar to the resource-to-resource interconnect 324 of the node 400 discussed above, the controller-to-controller interconnect 842 may be embodied as any type of communication interconnect capable of facilitating controller-to-controller communications. In the illustrative example, the controller-to-controller interconnect 842 is embodied as a high-speed point-to-point interconnect (e.g., faster than the I/O subsystem 322). For example, the controller-to-controller interconnect 842 may be embodied as a QuickPath Interconnect (QPI), an UltraPath Interconnect (UPI), or other high-speed point-to-point interconnect utilized for controller-to-controller communications. As such, in some examples, a memory controller 820 may access, through the controller-to-controller interconnect 842, memory that is within the memory set 832 associated with another memory controller 820. In some examples, a scalable memory controller is made of multiple smaller memory controllers, referred to herein as "chiplets", on a memory node (e.g., the memory node 800). The chiplets may be interconnected (e.g., using EMIB (Embedded Multi-Die Interconnect Bridge)). The combined chiplet memory controller may scale up to a relatively large number of memory controllers and I/O ports, (e.g., up to 16 memory channels). In some examples, the memory controllers 820 may implement a memory interleave (e.g., one memory address is mapped to the memory set 830, the next memory address is mapped to the memory set 832, and the third address is mapped to the memory set 830, etc.). The interleaving may be managed within the memory controllers 820, or from CPU sockets (e.g., of the compute node 500) across network links to the memory sets 830, 832, and may improve the latency and bandwidth associated with performing memory access operations as compared to accessing contiguous memory addresses from the same memory device.

Further, in some examples, the memory node 800 may be connected to one or more other nodes 400 (e.g., in the same rack 240 or an adjacent rack 240) through a waveguide, using the waveguide connector 880. Using a waveguide may provide high throughput access to the memory pool (e.g., the memory sets 830, 832) to another node (e.g., a node 400 in the same rack 240 or an adjacent rack 240 as the memory node 800) without adding to the load on the optical data connector 534.

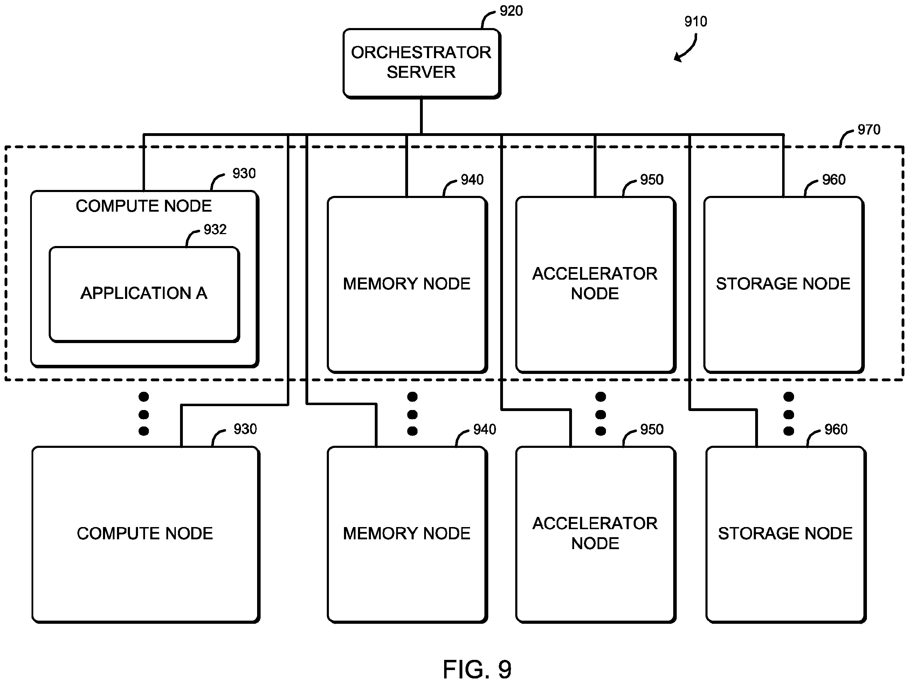

Referring now to FIG. 9, a system for executing one or more workloads (e.g., applications or microservices) may be implemented. In the illustrative example, the system 910 includes an orchestrator server 920, which may be embodied as a managed node comprising a compute device (e.g., a processor 520 on a compute node 500) executing management software (e.g., a cloud operating environment, such as OpenStack) that is communicatively coupled to multiple nodes 400 including a large number of compute nodes 930 (e.g., similar to the compute node 500), memory nodes 940 (e.g., similar to the memory node 800), accelerator nodes 950 (e.g., similar to the accelerator node 600), and storage nodes 960 (e.g., similar to the storage node 700). One or more of the nodes 930, 940, 950, 960 may be grouped into a managed node 970, such as by the orchestrator server 920, to collectively perform a workload (e.g., an application 932 executed in a virtual machine or in a container). While orchestrator node 920 is shown as a single entity, alternatively or additionally, its functionality can be distributed across multiple instances and physical locations.

The managed node 970 may be embodied as an assembly of physical resources 320, such as processors 520, memory resources 420, accelerator circuits 620, or data storage 750, from the same or different nodes 400. Further, the managed node may be established, defined, or "spun up" by the orchestrator server 920 at the time a workload is to be assigned to the managed node, and may exist regardless of whether a workload is presently assigned to the managed node. In the illustrative example, the orchestrator server 920 may selectively allocate and/or deallocate physical resources 320 from the nodes 400 and/or add or remove one or more nodes 400 from the managed node 970 as a function of quality of service (QoS) targets (e.g., a target throughput, a target latency, a target number instructions per second, etc.) associated with a service level agreement or class of service (COS or CLOS) for the workload (e.g., the application 932). In doing so, the orchestrator server 920 may receive telemetry data indicative of performance conditions (e.g., throughput, latency, instructions per second, etc.) in node 400 of the managed node 970 and compare the telemetry data to the quality-of-service targets to determine whether the quality of service targets are being satisfied. The orchestrator server 920 may additionally determine whether one or more physical resources may be deallocated from the managed node 970 while still satisfying the QoS targets, thereby freeing up those physical resources for use in another managed node (e.g., to execute a different workload). Alternatively, if the QoS targets are not presently satisfied, the orchestrator server 920 may determine to dynamically allocate additional physical resources to assist in the execution of the workload (e.g., the application 932) while the workload is executing. Similarly, the orchestrator server 920 may determine to dynamically deallocate physical resources from a managed node if the orchestrator server 920 determines that deallocating the physical resource would result in QoS targets still being met.

Additionally, in some examples, the orchestrator server 920 may identify trends in the resource utilization of the workload (e.g., the application 932), such as by identifying phases of execution (e.g., time periods in which different operations, having different resource utilizations characteristics, are performed) of the workload (e.g., the application 932) and pre-emptively identifying available resources in the data center and allocating them to the managed node 970 (e.g., within a predefined time period of the associated phase beginning). In some examples, the orchestrator server 920 may model performance based on various latencies and a distribution scheme to place workloads among compute nodes and other resources (e.g., accelerator nodes, memory nodes, storage nodes) in the data center. For example, the orchestrator server 920 may utilize a model that accounts for the performance, including optionally previously collected historical performance, of resources on the nodes 400 (e.g., FPGA performance, memory access latency, etc.) and the performance (e.g., congestion, latency, bandwidth) of the path through the network to the resource (e.g., FPGA). As such, the orchestrator server 920 may determine which resource(s) should be used with which workloads based on the total latency associated with potential resource available in the data center 100 (e.g., the latency associated with the performance of the resource itself in addition to the latency associated with the path through the network between the compute node executing the workload and the node 400 on which the resource is located).

In some examples, the orchestrator server 920 may generate a map of heat generation in the data center 100 using telemetry data (e.g., temperatures, fan speeds, etc.) reported from the nodes 400 and allocate resources to managed nodes as a function of the map of heat generation and predicted heat generation associated with different workloads, to maintain a target temperature and heat distribution in the data center 100. Additionally or alternatively, in some examples, the orchestrator server 920 may organize received telemetry data into a hierarchical model that is indicative of a relationship between the managed nodes (e.g., a spatial relationship such as the physical locations of the resources of the managed nodes within the data center 100 and/or a functional relationship, such as groupings of the managed nodes by the customers the managed nodes provide services for, the types of functions typically performed by the managed nodes, managed nodes that typically share or exchange workloads with others, etc.). Based on differences in the physical locations and resources in the managed nodes, a given workload may exhibit different resource utilizations (e.g., cause a different internal temperature, use a different percentage of processor or memory capacity) across the resources of different managed nodes. The orchestrator server 920 may determine the differences based on the telemetry data stored in the hierarchical model and factor the differences into a prediction of future resource utilization of a workload if the workload is reassigned from one managed node to another managed node, to accurately balance resource utilization in the data center 100. In some examples, the orchestrator server 920 may identify patterns in resource utilization phases of the workloads and use the patterns to predict future resource utilization of the workloads.

To reduce the computational load on the orchestrator server 920 and the data transfer load on the network, in some examples, the orchestrator server 920 may send self-test information to the nodes 400 to enable node 400 to locally (e.g., on the node 400) determine whether telemetry data generated by the node 400 satisfies one or more conditions (e.g., an available capacity that satisfies a predefined threshold, a temperature that satisfies a predefined threshold, etc.). Node 400 may then report back a simplified result (e.g., yes or no) to the orchestrator server 920, which the orchestrator server 920 may utilize in determining the allocation of resources to managed nodes.

Examples described herein can select a storage node 700 or memory node 800 to store data for access by node 400, node 500, or accelerator node 600 to reduce a transit time of data to meet applicable service level agreement (SLA) parameters. Nodes 400 to 800 can be used in a data center or disaggregated composite nodes. The techniques described herein can apply to both disaggregated and traditional server architectures. A traditional server can include a CPU, XPU, one or more memory devices, networking communicatively coupled to one or more circuit boards within a server.

### EDGE NETWORK

Edge computing, at a general level, refers to the implementation, coordination, and use of computing and resources at locations closer to the "edge" or collection of "edges" of the network. The purpose of this arrangement is to improve total cost of ownership, reduce application and network latency, reduce network backhaul traffic and associated energy consumption, improve service capabilities, and improve compliance with security or data privacy requirements (especially as compared to conventional cloud computing). Components that can perform edge computing operations ("edge nodes") can reside in whatever location needed by the system architecture or ad hoc service (e.g., in a high-performance compute data center or cloud installation; a designated edge node server, an enterprise server, a roadside server, a telecom central office; or a local or peer at-the-edge device being served consuming edge services).

With the illustrative edge networking systems described below, computing and storage resources are moved closer to the edge of the network (e.g., closer to the clients, endpoint devices, or "things"). By moving the computing and storage resources closer to the device producing or using the data, various latency, compliance, and/or monetary or resource cost constraints may be achievable relative to a standard networked (e.g., cloud computing) system. To do so, in some examples, pools of compute, memory, and/or storage resources may be located in, or otherwise equipped with, local servers, routers, and/or other network equipment. Such local resources facilitate the satisfying of constraints placed on the system. For example, the local compute and storage resources allow an edge system to perform computations in real-time or near real-time, which may be a consideration in low latency user-cases such as autonomous driving, video surveillance, and mobile media consumption. Additionally, these resources will benefit from service management in an edge system which provides the ability to scale and achieve local service level agreements (SLAs) or service level objectives (SLOs), manage tiered service requirements, and enable local features and functions on a temporary or permanent basis.

A pool can include a device on a same chassis or different physically dispersed devices on different chassis or different racks. A resource pool can include homogeneous processors, homogeneous processors, and/or a memory pool. Pooling of heterogeneous resources can be implemented using multiple homogeneous resource pools.

An illustrative edge computing system may support and/or provide various services to endpoint devices (e.g., client user equipment (UEs)), some of which may have different requirements or constraints. For example, some services may have priority or quality-of-service (QoS) constraints (e.g., traffic data for autonomous vehicles may have a higher priority than temperature sensor data), reliability and resiliency (e.g., traffic data may require mission-critical reliability, while temperature data may be allowed some error variance), as well as power, cooling, and form-factor constraints. These and other technical constraints may offer significant complexity and technical challenges when applied in the multi-stakeholder setting.

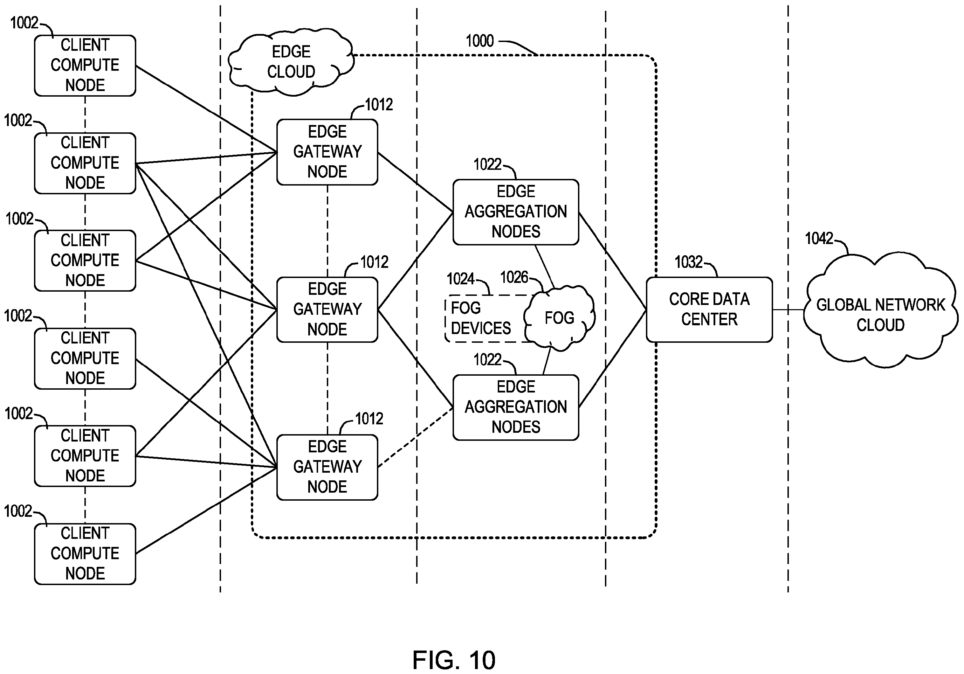

FIG. 10 generically depicts an edge computing system 1000 for providing edge services and applications to multi-stakeholder entities, as distributed among one or more client compute nodes 1002, one or more edge gateway nodes 1012, one or more edge aggregation nodes 1022, one or more core data centers 1032, and a global network cloud 1042, as distributed across layers of the network. One or more microservices can execute on one or more nodes and/or data center. The implementation of the edge computing system 1000 may be provided at or on behalf of a telecommunication service provider ("telco", or "TSP"), internet-of-things service provider, cloud service provider (CSP), enterprise entity, or any other number of entities. Various implementations and configurations of the system 1000 may be provided dynamically, such as when orchestrated to meet service objectives.

For example, the client compute nodes 1002 are located at an endpoint layer, while the edge gateway nodes 1012 are located at an edge devices layer (local level) of the edge computing system 1000. Additionally, the edge aggregation nodes 1022 (and/or fog devices 1024, if arranged or operated with or among a fog networking configuration 1026) are located at a network access layer (an intermediate level). Fog computing (or "fogging") generally refers to extensions of cloud computing to the edge of an enterprise's network or to the ability to manage transactions across the cloud/edge landscape, typically in a coordinated distributed or multi-node network. Some forms of fog computing provide the deployment of compute, storage, and networking services between end devices and cloud computing data centers, on behalf of the cloud computing locations. Some forms of fog computing also provide the ability to manage the workload/workflow level services, in terms of the overall transaction, by pushing certain workloads to the edge or to the cloud based on the ability to fulfill the overall service level agreement. Fog computing in many scenarios provide a decentralized architecture and serves as an extension to cloud computing by collaborating with one or more edge node devices, providing the subsequent amount of localized control, configuration and management, and much more for end devices. Thus, some forms of fog computing provide operations that are consistent with edge computing as discussed herein; the edge computing aspects discussed herein are also applicable to fog networks, fogging, and fog configurations. Further, aspects of the edge computing systems discussed herein may be configured as a fog, or aspects of a fog may be integrated into an edge computing architecture.

The core data center 1032 is located at a core network layer (a regional or geographically-central level), while the global network cloud 1042 is located at a cloud data center layer (a national or world-wide layer). The use of "core" is provided as a term for a centralized network location-deeper in the network-which is accessible by multiple edge nodes or components; however, a "core" does not necessarily designate the "center" or the deepest location of the network. Accordingly, the core data center 1032 may be located within, at, or near the edge cloud 1000. Although an illustrative number of client compute nodes 1002, edge gateway nodes 1012, edge aggregation nodes 1022, edge core data centers 1032, global network clouds 1042 are shown in FIG. 10, it should be appreciated that the edge computing system 1000 may include additional devices or systems at one or more layers. Devices at a layer can be configured as peer nodes to another and, accordingly, act in a collaborative manner to meet service objectives.

Consistent with the examples provided herein, a client compute node 1002 may be embodied as any type of endpoint component, device, appliance, or other thing capable of communicating as a producer or consumer of data. Further, the label "node" or "device" as used in the edge computing system 1000 does not necessarily mean that such node or device operates in a client or agent/minion/follower role; rather, one or more of the nodes or devices in the edge computing system 1000 refer to individual entities, nodes, or subsystems which include discrete or connected hardware or software configurations to facilitate or use the edge cloud 1000.

As such, the edge cloud 1000 is formed from network components and functional features operated by and within the edge gateway nodes 1012 and the edge aggregation nodes 1022. The edge cloud 1000 may be embodied as any type of deployment that provides edge computing and/or storage resources which are proximately located to radio access network (RAN) capable endpoint devices (e.g., mobile computing devices, IoT devices, smart devices, etc.), which are shown in FIG. 10 as the client compute nodes 1002. In other words, the edge cloud 1000 may be envisioned as an "edge" which connects the endpoint devices and traditional network access points that serves as an ingress point into service provider core networks, including mobile carrier networks (e.g., Global System for Mobile Communications (GSM) networks, Long-Term Evolution (LTE) networks, 5G/6G networks, etc.), while also providing storage and/or compute capabilities. Other types and forms of network access (e.g., Wi-Fi, long-range wireless, wired networks including optical networks) may also be utilized in place of or in combination with such 3GPP carrier networks.

In some examples, the edge cloud 1000 may form a portion of or otherwise provide an ingress point into or across a fog networking configuration 1026 (e.g., a network of fog devices 1024, not shown in detail), which may be embodied as a system-level horizontal and distributed architecture that distributes resources and services to perform a specific function. For instance, a coordinated and distributed network of fog devices 1024 may perform computing, storage, control, or networking aspects in the context of an IoT system arrangement. Other networked, aggregated, and distributed functions may exist in the edge cloud 1000 between the core data center 1032 and the client endpoints (e.g., client compute nodes 1002). Some of these are discussed in the following sections in the context of network functions or service virtualization, including the use of virtual edges and virtual services which are orchestrated for multiple stakeholders.

As discussed in more detail below, the edge gateway nodes 1012 and the edge aggregation nodes 1022 cooperate to provide various edge services and security to the client compute nodes 1002. Furthermore, because a client compute node 1002 may be stationary or mobile, a respective edge gateway node 1012 may cooperate with other edge gateway devices to propagate presently provided edge services, relevant service data, and security as the corresponding client compute node 1002 moves about a region. To do so, the edge gateway nodes 1012 and/or edge aggregation nodes 1022 may support multiple tenancy and multiple stakeholder configurations, in which services from (or hosted for) multiple service providers, owners, and multiple consumers may be supported and coordinated across a single or multiple compute devices.

A variety of security approaches may be utilized within the architecture of the edge cloud 1000. In a multi-stakeholder environment, there can be multiple loadable security modules (LSMs) used to provision policies that enforce the stakeholder's interests. Enforcement point environments could support multiple LSMs that apply the combination of loaded LSM policies (e.g., where the most constrained effective policy is applied, such as where if one or more of A, B or C stakeholders restricts access then access is restricted). Within the edge cloud 1000, an edge entity can provision LSMs that enforce the Edge entity interests. The Cloud entity can provision LSMs that enforce the cloud entity interests. Likewise, the various Fog and IoT network entities can provision LSMs that enforce the Fog entity's interests.

As described herein, client compute nodes 1002 can access data stored in client compute node 1002, edge gateway node, edge aggregation node, core data center 1032, and/or network cloud 1042 to reduce a transit time of data to meet applicable service level agreement (SLA) parameters.

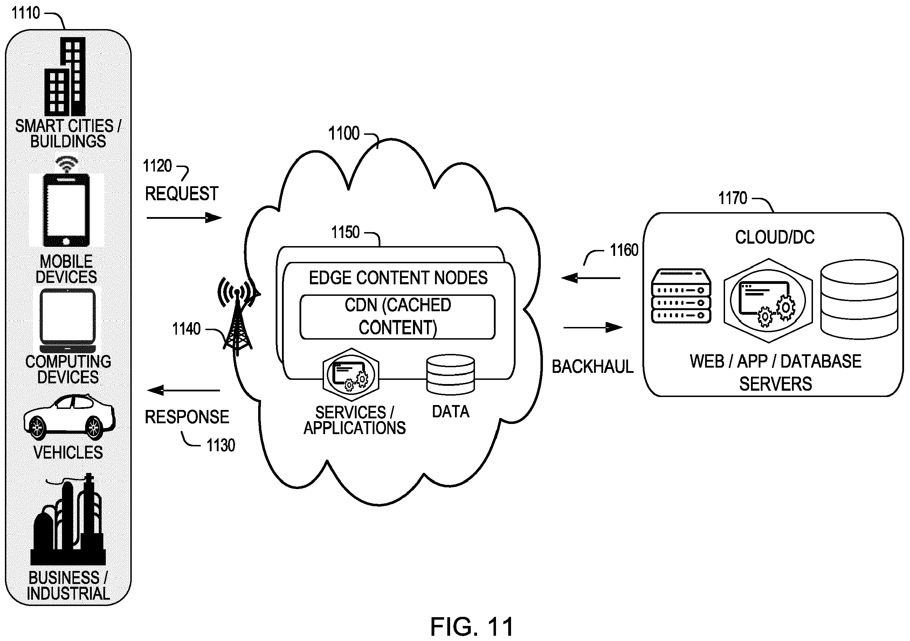

FIG. 11 shows an example where various client endpoints 1110 (in the form of mobile devices, computers, autonomous vehicles, business computing equipment, industrial processing equipment) provide requests 1120 for services or data transactions, and receive responses 1130 for the services or data transactions, to and from the edge cloud 1100 (e.g., via a wireless or wired network 1140). One or more microservices can execute on one or more nodes and/or data center. Within the edge cloud 1000, the CSP may deploy various compute and storage resources, such as edge content nodes 1150 to provide cached content from a distributed content delivery network. Other available compute and storage resources available on the edge content nodes 1150 may be used to execute other services and fulfill other workloads. The edge content nodes 1150 and other systems of the edge cloud 1000 are connected to a cloud or data center 1170, which uses a backhaul network 1160 to fulfill higher-latency requests from a cloud/data center for websites, applications, database servers, etc.

As described herein, endpoints 1110 can access data stored in edge content node 1150 or cloud 1170 to reduce a transit time of data to meet applicable service level agreement (SLA) parameters.

### EXAMPLES OF DATA PLACEMENT IN A MEMORY DEVICE

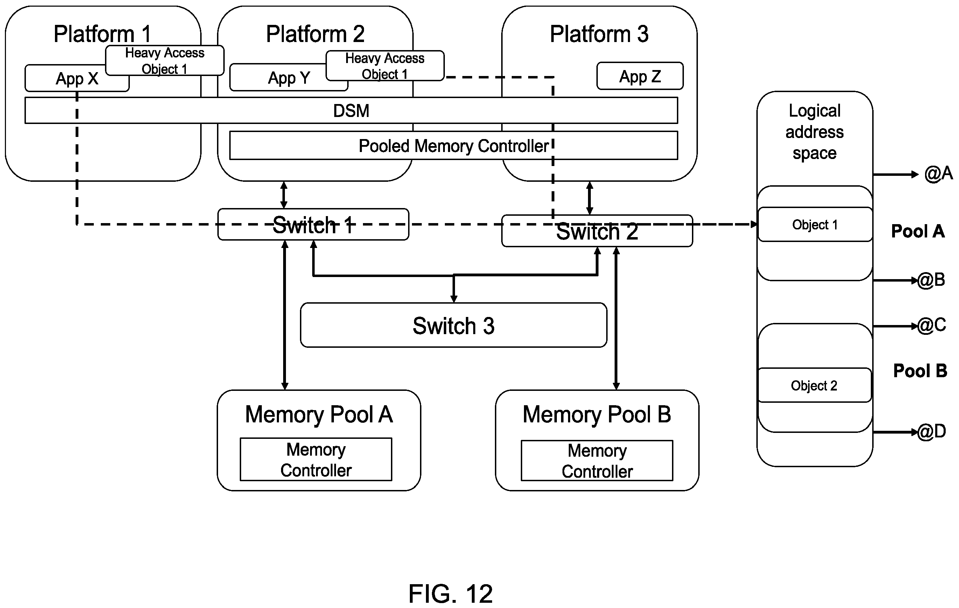

FIG. 12 depicts an example scenario with server platforms connected via switches to memory pools. Platforms 1, 2, and 3 are connected to memory pools A and B via multiple switches 1-3. For example, data in memory pools A and B can be mapped using distributed shared memory (DSM) in which physically separated memories can be addressed as a logical address space. In this scenario, application X (App X) runs on platform 1, App Y on platform 2, and App Z on platform 3 and memory Pools A and B are mapped onto the address space for the Apps X, Y, and Z. For Apps X and Y to access Object 1 from remote pool, memory pool B, communication takes 2 hops from platform 1 (via switch 1 and switch 2). However, memory pool A is 1 hop from platform 1 (via switch 1) and there may be a lower latency time for platform 1 to retrieve the Object 1 from memory pool A than to retrieve Object 1 from memory pool B.

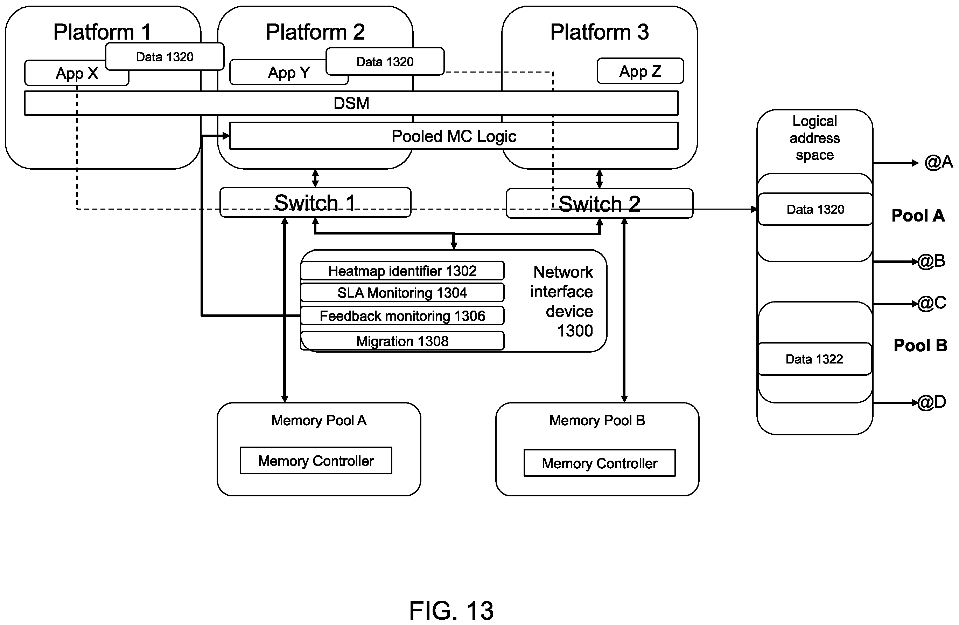

FIG. 13 provides an example of a network interface device determining a memory pool in which to store data. In this example, platforms 1-3 can execute applications that access data stored in memory pool A and/or B by network connectivity through switches 1 or 2, and/or network interface device 1300. For example, data 1320 can be accessed by platforms 1 and 2 by respective App X and Y. For example, data 1320 can represent one or more of: data, metadata, file, object, image, video, webpage information, shard, at least one database record, and so forth.

A platform can include a network or fabric interface, compute resources (e.g., CPUs, GPUs, or accelerators), and memory resources (e.g., memory, storage, and/or cache). A memory pool can include a network or fabric interface, compute resources (e.g., CPUs, GPUs, or accelerators), and memory resources (e.g., memory, storage, and/or cache). A memory pool can include accelerator devices, GPUs, or any component in a compute node. A memory pool can be accessible by a platform using a network or fabric interface. A memory pool can be located in a same data center or different data center as that of a platform. In some examples, a memory pool can include one or more dual in-line memory modules (DIMMs) to store data.

In some examples, network interface device 1300 can perform monitoring of satisfaction of service level agreement (SLA) of applications. For example, network interface device 1300 can utilize Top-down Micro-Architecture Method (TMAM) telemetry, the Unix system activity reporter (sar) command, Emon command monitoring tool that can profile application and system performance, in order to identify accesses to data, including data 1320, that incur excess latency or applications are not meeting SLAs when accessing the data.

In some examples, network interface device 1300 can be a last hop before memory pool A or B. Network interface device 1300 can determine whether to copy or migrate data 1320 (or less than all of data 1320) to another memory pool or even a local memory device on a platform (e.g., platform 1, 2, or 3) or platforms to attempt to reduce time to access the data.

In some examples, a hypervisor, operating system, or application can activate or deactivate network interface device 1300 from performing one or more of: monitoring for data that is a candidate to be moved to another memory pool, selecting a memory pool to which to migrate data 1320 to reduce latency of access time (e.g., read or write) via a network medium and/or memory/storage media bandwidth, or performing migration of data 1320 to the selected memory pool. After performing migration of data 1320, network interface device 1300 can intercept and redirect requests to data 1320 from various platforms to the selected memory pool. Network interface device 1300 can be implemented as one or more of: network interface controller (NIC), SmartNIC, router, switch, forwarding element, infrastructure processing unit (IPU), or data processing unit (DPU).

The examples are described with respect to data 1320. Network interface device 1300 can utilize heat map identifier 1302 to identify accesses to data 1320. Heat map identifier 1302 can identify congestion for different paths through switches from a memory pool to a platform. For example, heat map identifier 1302 can identify congestion in a path from memory pool A, through network interface device 1300, through switch 1 to platform 1 or platform 2. For example, heat map identifier 1302 can identify congestion in a path from memory pool A, through network interface device 1300, through switch 2 to platform 3. For example, heat map identifier 1302 can identify congestion from memory pool B, through network interface device 1300 and through switch 2 to platform 3.

Heat map identifier 1302 can identify transit time and corresponding congestion in paths from a source memory pool to a destination platform. Heat map identifier 1302 can monitor how frequent data are accessed by compute platforms including one or more requester applications (e.g., virtual machines, containers, microservices), requester applications, demand for the data, and the current latency to read or write that data. Heat map identifier 1302 can track one or more of: (a) number of accesses being performed to the data in terms of memory bandwidth demand, where an access can include a read or write and where memory bandwidth (or bandwidth to access memory) can be a measure of data read rate (e.g., bytes/second) from a memory device or write rates to the memory device (e.g., bytes/second); (b) current latency to access to the data from source memory or storage device in a memory pool for a requester (e.g., one or a combination of network transmission latency and memory access latency); (c) current memory pool (current target) that is hosting the data; (d) number of accesses to the data over a window of time by a requester; (e) number of accesses to the data by other requesters over a window of time; and/or other metrics. Tracked utilization (e) can be utilized to balance rates of data accesses among different requesters, which could steer a decision to maintain the data in a memory pool closer (e.g., fewer number of hops or shorter physical distance) to requesters that are more likely to access the data over a time window.

Telemetry gathered for monitored data and/or for one or more requester applications can include one or more of: cache misses, memory bandwidth utilization, memory size usage, memory allocation, core clock frequency speed, core clock cycle utilization, networking bandwidth used, core idle measurement, core execution of user space processes, core waiting for an input/output operation to complete, cache allocation/utilization, network interface bandwidth (transmit or receive) utilization, CPU cycle utilization, GPU cycle utilization, database transactions/second, collectd telemetry, performance monitoring unit (PMU) counters, performance monitoring counters (PMON), performance counter monitor (see, e.g., Willhalm, "Intel® Performance Counter Monitor - A Better Way to Measure CPU Utilization" (2017)), and the like. Various examples provide a collaboration across switches to track data accesses and other tracked utilizations by requesters on different platforms. Telemetry data for tracked utilization can be gathered using an orchestrator or distributed points of measurement.

In some examples, transit time and latency can be conveyed in metadata of in-band telemetry schemes such as those described in: "In-band Network Telemetry (INT) Dataplane Specification, v2.0," P4.org Applications Working Group (February 2020); IETF draft-lapukhov-dataplane-probe-01, "Data-plane probe for in-band telemetry collection" (2016); or IETF draft-ietf-ippm-ioam-data-09, "In-situ Operations, Administration, and Maintenance (IOAM)" (March 08, 2020). In-situ Operations, Administration, and Maintenance (IOAM) records operational and telemetry information in the packet while the packet traverses a path between two points in the network. IOAM discusses the data fields and associated data types for in-situ OAM. In-situ OAM data fields can be encapsulated into a variety of protocols such as NSH, Segment Routing, Geneve, IPv6 (via extension header), or IPv4.

Historic utilization and/or telemetry data can be used to preemptively identify traffic or congestion in one or more paths and potentially trigger migration of data to another memory pool.

Based on tracked utilization and gathered telemetry, network interface device 1300 can determine whether to move data 1320 to a particular selected memory pool to reduce latency or time to retrieve data from a memory pool or write data to a memory pool. For example, the selected memory pool can be a memory pool for which a transmit rate of the data between a platform that executes a process that is to access the data and the memory pool is expected to be sufficiently fast to meet or exceed SLA requirements for data access (e.g., read or write) times.

SLA monitoring 1304 can use the information gathered by heatmap identifier 1302 and map it to the SLA information for applications. If the SLA for a particular application is not being met, SLA monitoring 1304 can cause migration 1308 to move or copy data to another memory pool. In some examples, data can be copied so there are multiple copies of an data and network interface device 1300 can perform coherency operations as a home agent for the data. A home agent (HA) can attempt to provide data coherency among different memory devices, include a cache device, for particular addressable memory ranges.

In some cases, migrating data to a target memory pool could change performance of the target memory pool such that an SLA for the target memory pool could be violated and feedback monitoring 1306 can request migration 1308 to select another memory pool to migrate the data to.

Feedback monitoring 1306 can monitor impact of data migration on platforms and/or processes such as when multiple groups of nodes access the same data. In some examples, before moving data, feedback monitoring 1306 can validate that no other platform is accessing the data above a threshold rate of accesses over a time window. In some examples, before migration 1308 determines to migrate data to another memory pool, feedback monitoring 1306 can communicate with various switches notifying that there is an attempt to move data from a particular source to a particular target memory node and based on a reply of, for example, more than N number of SLAs would be violated or N number of negative votes from other switches, migration 1308 can determine not to migrate the data to another memory pool.

Migration 1308 can identify when a particular data hosted in a memory pool is to be migrated to another memory pool and what selected memory pool to migrate the data to, based at least in part on: SLA requirements, telemetry and utilization from heat map identifier 1302, and/or other metrics. Migration 1308 can identify when a particular data hosted in a memory pool is to be migrated to another memory pool and what selected memory pool to migrate the data in order to reduce a time to availability of the data at a computing platform or to reduce a time from a request to copy the data from a computing platform to completion of storage of the data at a target memory media or storage device. Time to availability of the data at a computing platform can include time taken to access a memory or storage media and transmit the data through a network to the computing platform. In some cases,

Based on a decision to migrate data, migration 1308 can communicate with a network interface device or a memory pool to cause migration or copying of the data to a selected memory pool, wait for the network interface device to provide affirmative (e.g., data moved) or negative response (e.g., data move not completed) and in case of positive response, the monitoring information for that data can be reset. The switch that performs the data movement between the pools can redirect requests for the data while data is being moved to provide continued access to the data during data migration. For example, migration 1308 can cause data copying from a memory pool to a target memory pool by: perform the data movement between the pools and redirect the requests while data is being moved to provide continued access to the data during data migration.

Migration 1308 can notify a software stack executing on one or more platforms after data has been moved to another memory pool to update distributed memory system or memory management schemes such as page tables, memory managers, and so forth in order to direct requests for the moved data to the new physical locations.

Data can be locked so that one switch and no other switch can perform migration of the data. After a lock is released, another switch can query heatmap identifier 1302 of another switch to determine a destination of the migrated data. Switches can coordinate with other switches to update their heatmaps. Note that, in order to determine whether to migrate or copy data, switches 1 and/or 2 can utilize their own or shared instances of one or more of: the heatmap identifier 1302, SLA monitoring 1304, feedback monitoring 1306, migration 1308, and/or interfaces 1402.

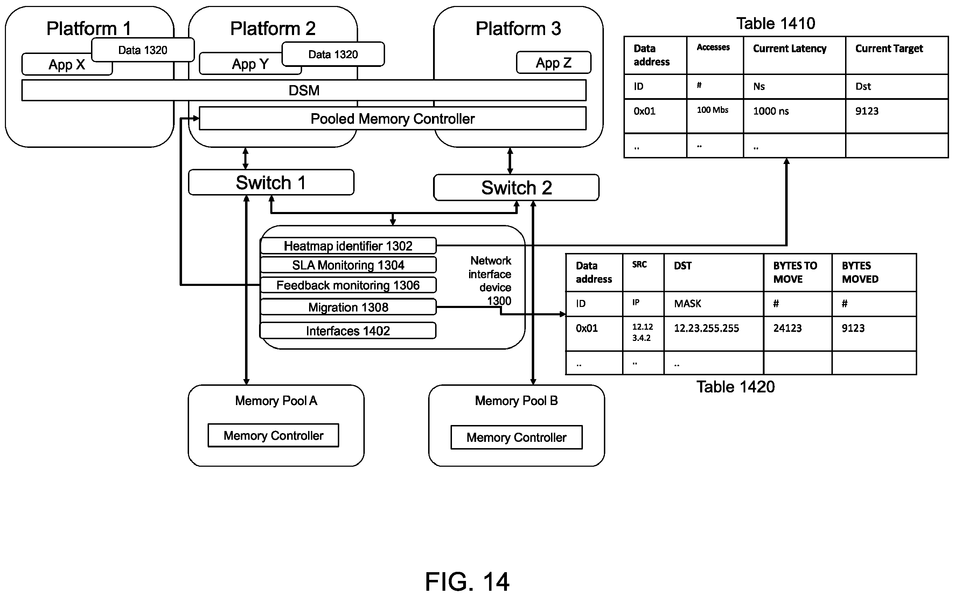

FIG. 14 depicts an example operation of a system. This example depicts interfaces 1402 that can be utilized to determine what data to migrate and to which memory pool. A latency interface of interfaces 1402 can allow specification of bandwidth or latency SLA requirements for particular data such as memory range or ID of that particular data and latency or bandwidth requirements for that data. Interfaces 1402 can be accessed by an API, receipt of a configuration file, receipt of a binary, or other technologies

A telemetry interface of interfaces 1402 can receive a memory range or ID of that particular data and TMAM metric indicating access latency or bandwidth. A switch can utilize this information being provided by platforms connected to a switch to decide whether data is to be moved or not moved to another memory pool. For example, if 4 nodes are accessing data A and the SLAs are not being met, the switch may be configured to decide to move the data. However, if only 1 SLA is being not satisfied but 3 other SLAs are satisfied, the switch may be configured to decide to not move the data.

A migration request interface of interfaces 1402 can be available for switches to request to migrate a particular data from a pool connected to switch to another pool managed by another switch. Data or a range of memory addresses can be managed by a primary switch for a memory pool that stores the data or range of memory addresses. The migration request interface of interfaces 1402 can receive a memory range or ID of that particular data as well as a next potential location for that data.

As shown in Table 1410, heatmap identifier 1302 can maintain one or more of: a data address identifier, data access bandwidth rate (e.g., network traversal and/or media access rate), time taken (e.g., latency) for data to reach one or more targets (Dst), or current target identifier. Time taken for data to reach a target can be based on timestamping performed as the data traverses through network elements to its destination. Accesses can indicate bandwidth available to transfer the data.

Table 1420 can track whether a data migration is progressing and whether migration is completed. For example, for a particular object or data identifier, a source (SRC) and destination (DST) can be tracked as well as number of bytes migrated. A total number of bytes to be migrated can be tracked to determine if all bytes have been migrated.

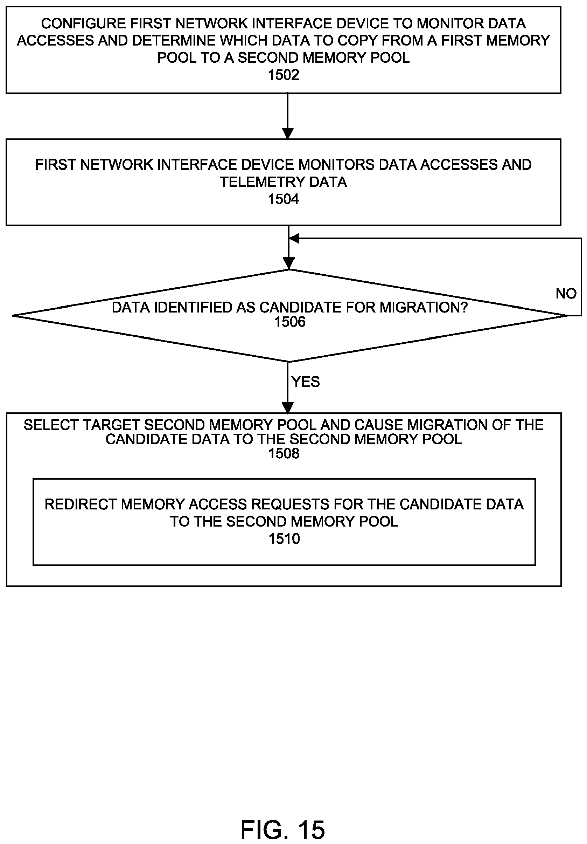

FIG. 15 depicts an example process. At 1502, a first network interface device can be configured to monitor accesses to data associated with a range of memory addresses and determine whether the data associated with a range of memory addresses is to be migrated from a first memory pool to a second memory pool. For example, an orchestrator, hypervisor, or operating system executing on a server can configure the first network interface device to determine whether data associated with a range of memory addresses are to be migrated from a first memory pool to a second memory pool and provide criteria for when to migrate data and which memory pool to select as a second memory pool. In some examples, the first network interface device is one or more of: a network interface controller (NIC), SmartNIC, router, switch, forwarding element, infrastructure processing unit (IPU), or data processing unit (DPU).

The first network interface device can be configured to monitor a region of memory addresses in the first memory pool for (a) memory bandwidth used to access the data; (b) latency to access to the data from the first memory pool for the requester; (c) number of accesses to the data over a window of time by the requester; (d) number of accesses to the data over a window of time by other requesters over a window of time; (e) historic congestion to and/or from one or more memory pools accessible to the computing platform; and/or (f) number of different requesters that accessed the data.

At 1504, the first network interface device can monitor for accesses to a region of memory addresses in the first memory pool and telemetry data related to execution of a requester of the data. For example, the first network interface device can monitor for one or more of (a) - (f) according to its configuration. Telemetry data can include data related to monitoring of satisfaction of service level agreement (SLA) of the requester of the data.

At 1506, the first network interface device can determine whether data associated with a region of memory addresses are to be migrated to another memory pool, a second memory pool. For example, based on tracked data access rates, data transmit rates, locations of various applications that access the data, telemetry, application performance with respect to their applicable SLA, and/or historic information described herein, the first network interface device can select a second memory pool and migrate the data to the selected second memory pool to reduce latency or time to retrieve or write the data. For example, the first network interface device can be configured in 1502 to trigger migration of the data to another memory pool based on particular levels of tracked data access rates, data transmit rates, locations of various applications that access the data, telemetry, application performance with respect to their applicable SLA, and/or historic information.

Based on a decision not to migrate the data to another memory pool, the process can repeat 1506. Based on a decision to migrate the data to another memory pool, the process can continue to 1508.

At 1508, the first network interface device can select a second memory pool to which to migrate the data and cause migration of the data from the first memory pool to the selected second memory pool. The second memory pool can be selected based on a configurations set in 1502. For example, the second memory pool can be selected as a memory pool for which a transmit rate of the data (e.g., network and/or media transfer rates) is expected to be sufficiently fast to meet or exceed SLA requirements for data access (e.g., read or write) times. The first network interface device can cause migration of the data to the selected memory pool. At 1510, during and/or after migration of the data to the selected memory pool, the first network interface device can redirect memory access requests to the memory address range associated with the data from the first memory pool to the second memory pool.

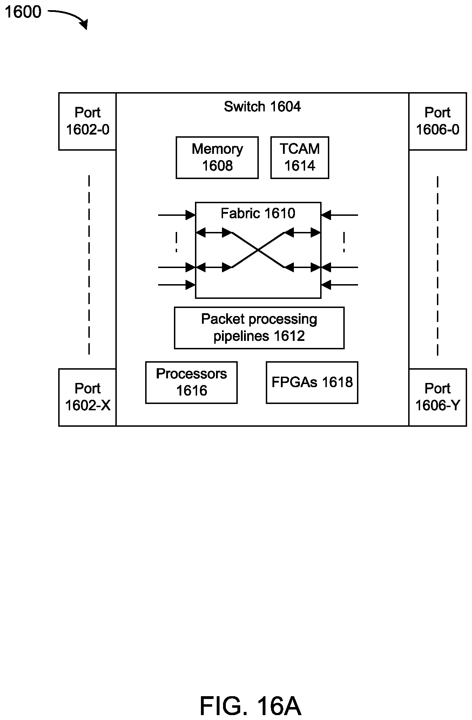

FIG. 16A depicts an example switch. Various examples can be used in or with the switch to determine whether to migrate data to another memory device and select another memory device, as described herein. Switch 1604 can route packets or frames of any format or in accordance with any specification from any port 1602-0 to 1602-X to any of ports 1606-0 to 1606-Y (or vice versa). Any of ports 1602-0 to 1602- can be connected to a network of one or more interconnected devices. Similarly, any of ports 1606-0 to 1606-Y can be connected to a network of one or more interconnected devices.

In some examples, switch fabric 1610 can provide routing of packets from one or more ingress ports for processing prior to egress from switch 1604. Switch fabric 160 can be implemented as one or more multi-hop topologies, where example topologies include torus, butterflies, buffered multi-stage, etc., or shared memory switch fabric (SMSF), among other implementations. SMSF can be any switch fabric connected to ingress ports and egress ports in the switch, where ingress subsystems write (store) packet segments into the fabric's memory, while the egress subsystems read (fetch) packet segments from the fabric's memory.

Memory 1608 can be configured to store packets received at ports prior to egress from one or more ports. Packet processing pipelines 1612 can determine which port to transfer packets or frames to using a table that maps packet characteristics with an associated output port. Packet processing pipelines 1612 can be configured to perform match-action on received packets to identify packet processing rules and next hops using information stored in a ternary content-addressable memory (TCAM) tables or exact match tables in some examples. For example, match-action tables or circuitry can be used whereby a hash of a portion of a packet is used as an index to find an entry. Packet processing pipelines 1612 can implement access control list (ACL) or packet drops due to queue overflow. Packet processing pipelines 1612 can be configured to determine whether to migrate data to another memory device and select another memory device, as described herein.

Configuration of operation of packet processing pipelines 1612, including its data plane, can be programmed using P4, C, Python, Broadcom Network Programming Language (NPL), or x86 compatible executable binaries or other executable binaries. Processors 1616 and FPGAs 1618 can be utilized for packet processing or modification.

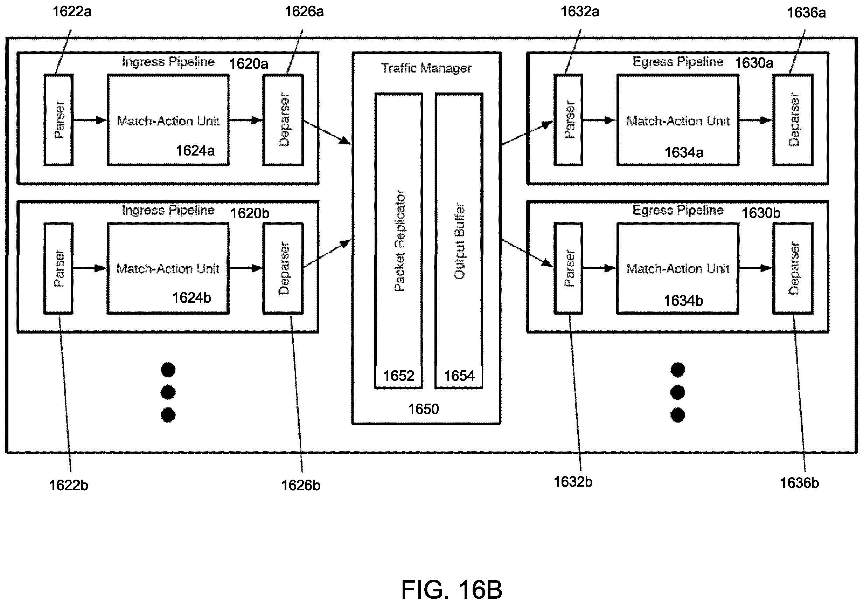

FIG. 16B depicts an example network forwarding system that can be used as a switch or router. For example, FIG. 16B illustrates several ingress pipelines 1620, a traffic management unit (referred to as a traffic manager) 1650, and several egress pipelines 1630. Though shown as separate structures, in some examples the ingress pipelines 1620 and the egress pipelines 1630 can use the same circuitry resources. In some examples, the pipeline circuitry is configured to process ingress and/or egress pipeline packets synchronously, as well as non-packet data. That is, a particular stage of the pipeline may process any combination of an ingress packet, an egress packet, and non-packet data in the same clock cycle. However, in other examples, the ingress and egress pipelines are separate circuitry. In some of these other examples, the ingress pipelines also process the non-packet data.

In some examples, in response to receiving a packet, the packet is directed to one of the ingress pipelines 1620 where an ingress pipeline which may correspond to one or more ports of a hardware forwarding element. After passing through the selected ingress pipeline 1620, the packet is sent to the traffic manager 1650, where the packet is enqueued and placed in the output buffer 1654. In some examples, the ingress pipeline 1620 that processes the packet specifies into which queue the packet is to be placed by the traffic manager 1650 (e.g., based on the destination of the packet or a flow identifier of the packet). The traffic manager 1650 then dispatches the packet to the appropriate egress pipeline 1630 where an egress pipeline may correspond to one or more ports of the forwarding element. In some examples, there is no necessary correlation between which of the ingress pipelines 1620 processes a packet and to which of the egress pipelines 1630 the traffic manager 1650 dispatches the packet. That is, a packet might be initially processed by ingress pipeline 1620b after receipt through a first port, and then subsequently by egress pipeline 1630a to be sent out a second port, etc.

A least one ingress pipeline 1620 includes a parser 1622, plural match-action units (MAUs) 1624, and a deparser 1626. Similarly, egress pipeline 1630 can include a parser 1632, plural MAUs 1634, and a deparser 1636. The parser 1622 or 1632, in some examples, receives a packet as a formatted collection of bits in a particular order, and parses the packet into its constituent header fields. In some examples, the parser starts from the beginning of the packet and assigns header fields to fields (e.g., data containers) for processing. In some examples, the parser 1622 or 1632 separates out the packet headers (up to a designated point) from the payload of the packet, and sends the payload (or the entire packet, including the headers and payload) directly to the deparser without passing through the MAU processing.

MAUs 1624 or 1634 can perform processing on the packet data. In some examples, MAUs includes a sequence of stages, with a stage including one or more match tables and an action engine. A match table can include a set of match entries against which the packet header fields are matched (e.g., using hash tables), with the match entries referencing action entries. When the packet matches a particular match entry, that particular match entry references a particular action entry which specifies a set of actions to perform on the packet (e.g., sending the packet to a particular port, modifying one or more packet header field values, dropping the packet, mirroring the packet to a mirror buffer, etc.). The action engine of the stage can perform the actions on the packet, which is then sent to the next stage of the MAU. For example, MAU(s) can be used to determine whether to migrate data to another memory device and select another memory device, as described herein.

The deparser 1626 or 1636 can reconstruct the packet using a packet header vector (PHV) as modified by the MAU 1624 or 1634 and the payload received directly from the parser 1622 or 1632. The deparser can construct a packet that can be sent out over the physical network, or to the traffic manager 1650. In some examples, the deparser can construct this packet based on data received along with the PHV that specifies the protocols to include in the packet header, as well as its own stored list of data container locations for possible protocol's header fields.

Traffic manager 1650 can include a packet replicator 1652 and output buffer 1654. In some examples, the traffic manager 1650 may include other components, such as a feedback generator for sending signals regarding output port failures, a series of queues and schedulers for these queues, queue state analysis components, as well as additional components. The packet replicator 1652 of some examples performs replication for broadcast/multicast packets, generating multiple packets to be added to the output buffer (e.g., to be distributed to different egress pipelines).

The output buffer 1654 can be part of a queuing and buffering system of the traffic manager in some examples. The traffic manager 1650 can provide a shared buffer that accommodates any queuing delays in the egress pipelines. In some examples, this shared output buffer 1654 can store packet data, while references (e.g., pointers) to that packet data are kept in different queues for egress pipeline 1630. The egress pipelines can request their respective data from the common data buffer using a queuing policy that is control-plane configurable. When a packet data reference reaches the head of its queue and is scheduled for dequeuing, the corresponding packet data can be read out of the output buffer 1654 and into the corresponding egress pipeline 1630. In some examples, packet data may be referenced by multiple pipelines (e.g., for a multicast packet). In this case, the packet data is not removed from this output buffer 1654 until references to the packet data have cleared their respective queues.

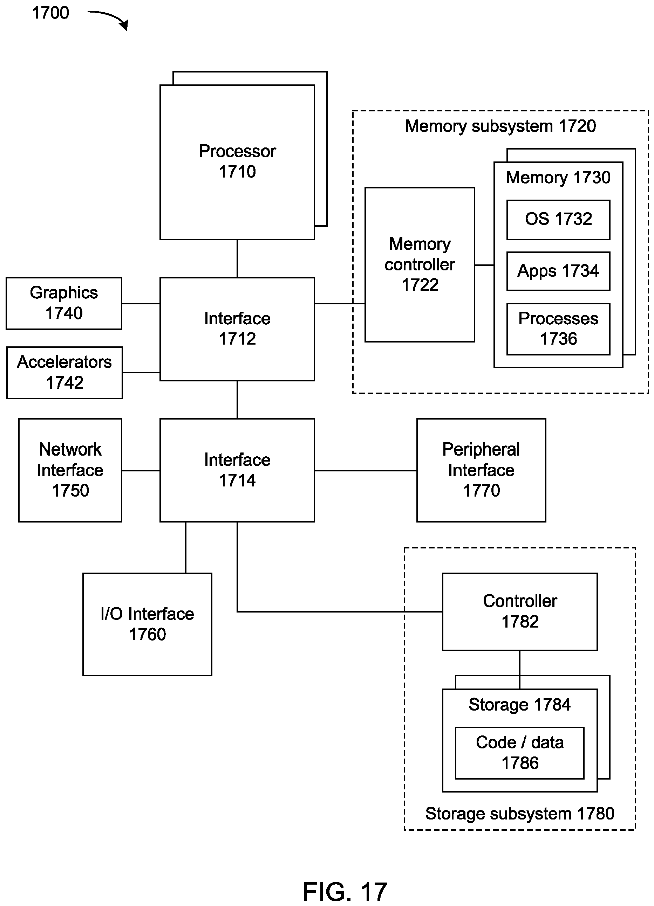

FIG. 17 depicts an example computing system. Various examples can use components of system 1700 (e.g., processor 1710, network interface 1750, and so forth) to perform configuration of one or more network interface devices and/or nodes to determine whether to migrate data to another memory device and select another memory device, as described herein.

System 1700 includes processor 1710, which provides processing, operation management, and execution of instructions for system 1700. Processor 1710 can include any type of microprocessor, central processing unit (CPU), graphics processing unit (GPU), processing core, or other processing hardware to provide processing for system 1700, or a combination of processors. Processor 1710 controls the overall operation of system 1700, and can be or include, one or more programmable general-purpose or special-purpose microprocessors, digital signal processors (DSPs), programmable controllers, application specific integrated circuits (ASICs), programmable logic devices (PLDs), or the like, or a combination of such devices.

In one example, system 1700 includes interface 1712 coupled to processor 1710, which can represent a higher speed interface or a high throughput interface for system components that needs higher bandwidth connections, such as memory subsystem 1720 or graphics interface components 1740, or accelerators 1742. Interface 1712 represents an interface circuit, which can be a standalone component or integrated onto a processor die. Where present, graphics interface 1740 interfaces to graphics components for providing a visual display to a user of system 1700. In one example, graphics interface 1740 can drive a high definition (HD) display that provides an output to a user. High definition can refer to a display having a pixel density of approximately 100 PPI (pixels per inch) or greater and can include formats such as full HD (e.g., 1080p), retina displays, 4K (ultra-high definition or UHD), or others. In one example, the display can include a touchscreen display. In one example, graphics interface 1740 generates a display based on data stored in memory 1730 or based on operations executed by processor 1710 or both. In one example, graphics interface 1740 generates a display based on data stored in memory 1730 or based on operations executed by processor 1710 or both.

Accelerators 1742 can be a fixed function or programmable offload engine that can be accessed or used by a processor 1710. For example, an accelerator among accelerators 1742 can provide compression (DC) capability, cryptography services such as public key encryption (PKE), cipher, hash/authentication capabilities, decryption, or other capabilities or services. In some examples, in addition or alternatively, an accelerator among accelerators 1742 provides field select controller capabilities as described herein. In some cases, accelerators 1742 can be integrated into a CPU socket (e.g., a connector to a motherboard or circuit board that includes a CPU and provides an electrical interface with the CPU). For example, accelerators 1742 can include a single or multicore processor, graphics processing unit, logical execution unit single or multi-level cache, functional units usable to independently execute programs or threads, application specific integrated circuits (ASICs), neural network processors (NNPs), programmable control logic, and programmable processing elements such as field programmable gate arrays (FPGAs) or programmable logic devices (PLDs). Accelerators 1742 can provide multiple neural networks, CPUs, processor cores, general purpose graphics processing units, or graphics processing units can be made available for use by artificial intelligence (AI) or machine learning (ML) models. For example, the AI model can use or include one or more of: a reinforcement learning scheme, Q-learning scheme, deep-Q learning, or Asynchronous Advantage Actor-Critic (A3C), combinatorial neural network, recurrent combinatorial neural network, or other AI or ML model. Multiple neural networks, processor cores, or graphics processing units can be made available for use by AI or ML models.

Memory subsystem 1720 represents the main memory of system 1700 and provides storage for code to be executed by processor 1710, or data values to be used in executing a routine. Memory subsystem 1720 can include one or more memory devices 1730 such as read-only memory (ROM), flash memory, one or more varieties of random access memory (RAM) such as DRAM, or other memory devices, or a combination of such devices. Memory 1730 stores and hosts, among other things, operating system (OS) 1732 to provide a software platform for execution of instructions in system 1700. Additionally, applications 1734 can execute on the software platform of OS 1732 from memory 1730. Applications 1734 represent programs that have their own operational logic to perform execution of one or more functions. Processes 1736 represent agents or routines that provide auxiliary functions to OS 1732 or one or more applications 1734 or a combination. OS 1732, applications 1734, and processes 1736 provide software logic to provide functions for system 1700. In one example, memory subsystem 1720 includes memory controller 1722, which is a memory controller to generate and issue commands to memory 1730. It will be understood that memory controller 1722 could be a physical part of processor 1710 or a physical part of interface 1712. For example, memory controller 1722 can be an integrated memory controller, integrated onto a circuit with processor 1710.

In some examples, OS 1732 can be Linux^{®}, Windows^{®} Server or personal computer, FreeBSD^{®}, Android^{®}, MacOS^{®}, iOS^{®}, VMware vSphere, openSUSE, RHEL, CentOS, Debian, Ubuntu, or any other operating system. The OS and driver can execute on a CPU sold or designed by Intel^{®}, ARM^{®}, AMD^{®}, Qualcomm^{®}, IBM^{®}, Texas Instruments^{®}, among others. A driver executed by a process can configure network interface 1750 to determine whether to migrate data to another memory device and select another memory device, as described herein.

While not specifically illustrated, it will be understood that system 1700 can include one or more buses or bus systems between devices, such as a memory bus, a graphics bus, interface buses, or others. Buses or other signal lines can communicatively or electrically couple components together, or both communicatively and electrically couple the components. Buses can include physical communication lines, point-to-point connections, bridges, adapters, controllers, or other circuitry or a combination. Buses can include, for example, one or more of a system bus, a Peripheral Component Interconnect (PCI) bus, a Hyper Transport or industry standard architecture (ISA) bus, a small computer system interface (SCSI) bus, a universal serial bus (USB), or an Institute of Electrical and Electronics Engineers (IEEE) standard 1394 bus (Firewire).

In one example, system 1700 includes interface 1714, which can be coupled to interface 1712. In one example, interface 1714 represents an interface circuit, which can include standalone components and integrated circuitry. In one example, multiple user interface components or peripheral components, or both, couple to interface 1714. Network interface 1750 provides system 1700 the ability to communicate with remote devices (e.g., servers or other computing devices) over one or more networks. Network interface 1750 can include an Ethernet adapter, wireless interconnection components, cellular network interconnection components, USB (universal serial bus), or other wired or wireless standards-based or proprietary interfaces. Network interface 1750 can transmit data to a device that is in the same data center or rack or a remote device, which can include sending data stored in memory. Network interface 1750 can receive data from a remote device, which can include storing received data into memory. Various examples of network interface 1750 can determine whether to migrate data to another memory device and select another memory device, as described herein.

In one example, system 1700 includes one or more input/output (I/O) interface(s) 1760. I/O interface 1760 can include one or more interface components through which a user interacts with system 1700 (e.g., audio, alphanumeric, tactile/touch, or other interfacing). Peripheral interface 1770 can include any hardware interface not specifically mentioned above. Peripherals refer generally to devices that connect dependently to system 1700. A dependent connection is one where system 1700 provides the software platform or hardware platform or both on which operation executes, and with which a user interacts.

In one example, system 1700 includes storage subsystem 1780 to store data in a nonvolatile manner. In one example, in certain system implementations, at least certain components of storage 1780 can overlap with components of memory subsystem 1720. Storage subsystem 1780 includes storage device(s) 1784, which can be or include any conventional medium for storing large amounts of data in a nonvolatile manner, such as one or more magnetic, solid state, or optical based disks, or a combination. Storage 1784 holds code or instructions and data 1786 in a persistent state (e.g., the value is retained despite interruption of power to system 1700). Storage 1784 can be generically considered to be a "memory," although memory 1730 is typically the executing or operating memory to provide instructions to processor 1710. Whereas storage 1784 is nonvolatile, memory 1730 can include volatile memory (e.g., the value or state of the data is indeterminate if power is interrupted to system 1700). In one example, storage subsystem 1780 includes controller 1782 to interface with storage 1784. In one example controller 1782 is a physical part of interface 1714 or processor 1710 or can include circuits or logic in both processor 1710 and interface 1714.

A volatile memory is memory whose state (and therefore the data stored in it) is indeterminate if power is interrupted to the device. Dynamic volatile memory uses refreshing the data stored in the device to maintain state. One example of dynamic volatile memory incudes DRAM (Dynamic Random Access Memory), or some variant such as Synchronous DRAM (SDRAM). An example of a volatile memory include a cache. A memory subsystem as described herein may be compatible with a number of memory technologies, such as DDR3 (Double Data Rate version 3, original release by JEDEC (Joint Electronic Device Engineering Council) on June 16, 2007). DDR4 (DDR version 4, initial specification published in September 2012 by JEDEC), DDR4E (DDR version 4), LPDDR3 (Low Power DDR version3, JESD209-3B, August 2013 by JEDEC), LPDDR4) LPDDR version 4, JESD209-4, originally published by JEDEC in August 2014), WIO2 (Wide Input/output version 2, JESD229-2 originally published by JEDEC in August 2014, HBM (High Bandwidth Memory, JESD325, originally published by JEDEC in October 2013, LPDDR5 (currently in discussion by JEDEC), HBM2 (HBM version 2), currently in discussion by JEDEC, or others or combinations of memory technologies, and technologies based on derivatives or extensions of such specifications. The JEDEC standards are available at www.jedec.org.

A non-volatile memory (NVM) device is a memory whose state is determinate even if power is interrupted to the device. In one example, the NVM device can comprise a block addressable memory device, such as NAND technologies, or more specifically, multi-threshold level NAND flash memory (for example, Single-Level Cell ("SLC"), Multi-Level Cell ("MLC"), Quad-Level Cell ("QLC"), Tri-Level Cell ("TLC"), or some other NAND). A NVM device can also comprise a byte-addressable write-in-place three dimensional cross point memory device, or other byte addressable write-in-place NVM device (also referred to as persistent memory), such as single or multi-level Phase Change Memory (PCM) or phase change memory with a switch (PCMS), Intel^{®} Optane^{™} memory, NVM devices that use chalcogenide phase change material (for example, chalcogenide glass), resistive memory including metal oxide base, oxygen vacancy base and Conductive Bridge Random Access Memory (CB-RAM), nanowire memory, ferroelectric random access memory (FeRAM, FRAM), magneto resistive random access memory (MRAM) that incorporates memristor technology, spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of one or more of the above, or other memory.

A power source (not depicted) provides power to the components of system 1700. More specifically, power source typically interfaces to one or multiple power supplies in system 1700 to provide power to the components of system 1700. In one example, the power supply includes an AC to DC (alternating current to direct current) adapter to plug into a wall outlet. Such AC power can be renewable energy (e.g., solar power) power source. In one example, power source includes a DC power source, such as an external AC to DC converter. In one example, power source or power supply includes wireless charging hardware to charge via proximity to a charging field. In one example, power source can include an internal battery, alternating current supply, motion-based power supply, solar power supply, or fuel cell source.

In an example, system 1700 can be implemented using interconnected compute sleds of processors, memories, storages, network interfaces, and other components. High speed interconnects can be used such as: Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Peripheral Component Interconnect express (PCIe), Intel QuickPath Interconnect (QPI), Intel Ultra Path Interconnect (UPI), Intel On-Chip System Fabric (IOSF), Omni-Path, Compute Express Link (CXL), HyperTransport, high-speed fabric, NVLink, Advanced Microcontroller Bus Architecture (AMBA) interconnect, OpenCAPI, Gen-Z, Infinity Fabric (IF), Cache Coherent Interconnect for Accelerators (CCIX), 3GPP Long Term Evolution (LTE) (4G), 3GPP 5G, and variations thereof. Data can be written to or read from virtualized storage nodes or memory pools using a protocol such as non-volatile memory express (NVMe) over Fabrics (NVMe-oF) or NVMe.

Examples herein may be implemented in various types of computing and networking equipment, such as switches, routers, racks, and blade servers such as those employed in a data center and/or server farm environment. The servers used in data centers and server farms comprise arrayed server configurations such as rack-based servers or blade servers. These servers are interconnected in communication via various network provisions, such as partitioning sets of servers into Local Area Networks (LANs) with appropriate switching and routing facilities between the LANs to form a private Intranet. For example, cloud hosting facilities may typically employ large data centers with a multitude of servers. A blade comprises a separate computing platform that is configured to perform server-type functions, that is, a "server on a card." Accordingly, a blade can include components common to conventional servers, including a main printed circuit board (main board) providing internal wiring (e.g., buses) for coupling appropriate integrated circuits (ICs) and other components mounted to the board.

In some examples, network interface and other examples described herein can be used in connection with a base station (e.g., 3G, 4G, 5G and so forth), macro base station (e.g., 5G networks), picostation (e.g., an IEEE 802.11 compatible access point), nanostation (e.g., for Point-to-MultiPoint (PtMP) applications), on-premises data centers, off-premises data centers, edge network elements, edge servers, edge switches, fog network elements, and/or hybrid data centers (e.g., data center that use virtualization, cloud and software-defined networking to deliver application workloads across physical data centers and distributed multi-cloud environments).

Various examples may be implemented using hardware elements, software elements, or a combination of both. In some examples, hardware elements may include devices, components, processors, microprocessors, circuits, circuit elements (e.g., transistors, resistors, capacitors, inductors, and so forth), integrated circuits, ASICs, PLDs, DSPs, FPGAs, memory units, logic gates, registers, semiconductor device, chips, microchips, chip sets, and so forth. In some examples, software elements may include software components, programs, applications, computer programs, application programs, system programs, machine programs, operating system software, middleware, firmware, software modules, routines, subroutines, functions, methods, procedures, software interfaces, APIs, instruction sets, computing code, computer code, code segments, computer code segments, words, values, symbols, or combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation. A processor can be one or more combination of a hardware state machine, digital control logic, central processing unit, or any hardware, firmware and/or software elements.

Some examples may be implemented using or as an article of manufacture or at least one computer-readable medium. A computer-readable medium may include a non-transitory storage medium to store logic. In some examples, the non-transitory storage medium may include one or more types of computer-readable storage media capable of storing electronic data, including volatile memory or non-volatile memory, removable or non-removable memory, erasable or non-erasable memory, writeable or re-writeable memory, and so forth. In some examples, the logic may include various software elements, such as software components, programs, applications, computer programs, application programs, system programs, machine programs, operating system software, middleware, firmware, software modules, routines, subroutines, functions, methods, procedures, software interfaces, API, instruction sets, computing code, computer code, code segments, computer code segments, words, values, symbols, or combination thereof.

According to some examples, a computer-readable medium may include a non-transitory storage medium to store or maintain instructions that when executed by a machine, computing device or system, cause the machine, computing device or system to perform methods and/or operations in accordance with the described examples. The instructions may include any suitable type of code, such as source code, compiled code, interpreted code, executable code, static code, dynamic code, and the like. The instructions may be implemented according to a predefined computer language, manner or syntax, for instructing a machine, computing device or system to perform a certain function. The instructions may be implemented using any suitable high-level, low-level, object-oriented, visual, compiled and/or interpreted programming language.

One or more aspects of at least one example may be implemented by representative instructions stored on at least one machine-readable medium which represents various logic within the processor, which when read by a machine, computing device or system causes the machine, computing device or system to fabricate logic to perform the techniques described herein. Such representations, known as "IP cores" may be stored on a tangible, machine readable medium and supplied to various customers or manufacturing facilities to load into the fabrication machines that actually make the logic or processor.

The appearances of the phrase "one example" or "an example" are not necessarily all referring to the same example or example. Any aspect described herein can be combined with any other aspect or similar aspect described herein, regardless of whether the aspects are described with respect to the same figure or element. Division, omission or inclusion of block functions depicted in the accompanying figures does not infer that the hardware components, circuits, software and/or elements for implementing these functions would necessarily be divided, omitted, or included in examples.

Some examples may be described using the expression "coupled" and "connected" along with their derivatives. These terms are not necessarily intended as synonyms for each other. For example, descriptions using the terms "connected" and/or "coupled" may indicate that two or more elements are in direct physical or electrical contact with each other. The term "coupled," however, may also mean that two or more elements are not in direct contact with each other, but yet still co-operate or interact with each other.

The terms "first," "second," and the like, herein do not denote any order, quantity, or importance, but rather are used to distinguish one element from another. The terms "a" and "an" herein do not denote a limitation of quantity, but rather denote the presence of at least one of the referenced items. The term "asserted" used herein with reference to a signal denote a state of the signal, in which the signal is active, and which can be achieved by applying any logic level either logic 0 or logic 1 to the signal. The terms "follow" or "after" can refer to immediately following or following after some other event or events. Other sequences of operations may also be performed according to alternative examples. Furthermore, additional operations may be added or removed depending on the particular applications. Any combination of changes can be used and one of ordinary skill in the art with the benefit of this disclosure would understand the many variations, modifications, and alternative examples thereof.

Disjunctive language such as the phrase "at least one of X, Y, or Z," unless specifically stated otherwise, is otherwise understood within the context as used in general to present that an item, term, etc., may be either X, Y, or Z, or combination thereof (e.g., X, Y, and/or Z). Thus, such disjunctive language is not generally intended to, and should not, imply that certain examples require at least one of X, at least one of Y, or at least one of Z to each be present. Additionally, conjunctive language such as the phrase "at least one of X, Y, and Z," unless specifically stated otherwise, should also be understood to mean X, Y, Z, or combination thereof, including "X, Y, and/or Z."'

Illustrative examples of the devices, systems, and methods disclosed herein are provided below. An example of the devices, systems, and methods may include one or more, and combination of, the examples described below.
Example 1 includes one or more examples and includes a computer-readable medium comprising instructions stored thereon, that if executed by one or more processors, cause the one or more processors to: configure a network interface device to monitor accesses to data in a first memory pool and selectively migrate the data to a second memory pool based at least, in part, on a transmission rate of the data to a computing platform.
Example 2 includes one or more examples, wherein the accesses comprise read and/or write operations.
Example 3 includes one or more examples, wherein the network interface device is to selectively migrate the data to a second memory pool also based at least, in part, on one or more of: (a) memory bandwidth used to access the data; (b) latency to access the data from the first memory pool by the computing platform; (c) number of accesses to the data over a window of time by the computing platform; (d) number of accesses to the data over a window of time by other computing platforms over a window of time; (e) historic congestion to and/or from one or more memory pools accessible to the computing platform; and/or (f) number of different computing platforms that access the data.
Example 4 includes one or more examples, wherein the network interface device is to selectively migrate the data to a second memory pool also based at least, in part, on telemetry data indicative of whether a service level agreement (SLA) of the computing platform is met or not met.
Example 5 includes one or more examples, comprising instructions stored thereon, that if executed by one or more processors, cause the one or more processors to: configure the network interface device to select the second memory pool based at least in part to reduce time to transmit the data to the computing platform compared to a transmit time of the data to the computing platform from the first memory pool.
Example 6 includes one or more examples, comprising instructions stored thereon, that if executed by one or more processors, cause the one or more processors to: configure the network interface device to notify the computing platform of a change of storage of the data to the second memory pool.
Example 7 includes one or more examples, comprising instructions stored thereon, that if executed by one or more processors, cause the one or more processors to: configure the network interface device to redirect memory access requests for the data to the second memory pool during migration of the data to the second memory pool.
Example 8 includes one or more examples, wherein the network interface device comprises one or more of: network interface controller (NIC), SmartNIC, forwarding element, switch, infrastructure processing unit (IPU), or data processing unit (DPU).
Example 9 includes one or more examples, and includes an apparatus comprising: a network interface device, when operational, configured to: select data of a region of addressable memory addresses to migrate from a first memory pool to a second memory pool to lower a transit time of the data of the region of addressable memory addresses to a computing platform.
Example 10 includes one or more examples, wherein to select data of a region of addressable memory addresses to migrate from a first memory pool to a second memory pool to lower a transit time of the data of the region of addressable memory addresses to a computing platform, the network interface device is based at least, in part, on one or more of: (a) memory bandwidth used to access the data; (b) latency to access the data from the first memory pool by the computing platform; (c) number of accesses to the data over a window of time by the computing platform; (d) number of accesses to the data over a window of time by other computing platforms over a window of time; (e) historic congestion to and/or from one or more memory pools accessible to the computing platform; and/or (f) number of different computing platforms that access the data.
Example 11 includes one or more examples, wherein to select data of a region of addressable memory addresses to migrate from a first memory pool to a second memory pool to lower a transit time of the data of the region of addressable memory addresses to a computing platform, the network interface device is based at least, in part, on telemetry data indicative of whether a service level agreement (SLA) of the computing platform is met or not met.
Example 12 includes one or more examples, wherein the network interface device, when operational, is to notify a memory manager associated with the computing platform of a change of storage of the data to the second memory pool.
Example 13 includes one or more examples, wherein the network interface device, when operational, is to redirect memory access requests for the data to the second memory pool during migration of the data to the second memory pool.
Example 14 includes one or more examples, wherein the network interface device, when operational, is to selectively migrate the data back to the first memory pool or another memory pool based on a determination that a service level agreement (SLA) associated with the computing platform or the second memory pool is not met.
Example 15 includes one or more examples, wherein the network interface device comprises one or more of: network interface controller (NIC), SmartNIC, forwarding element, switch, infrastructure processing unit (IPU), or data processing unit (DPU).
Example 16 includes one or more examples, and includes a server to configure the network interface device to perform the select data of a region of addressable memory addresses to migrate from a first memory pool to a second memory pool to lower a transit time of the data of the region of addressable memory addresses to a computing platform.
Example 17 includes one or more examples, and includes a datacenter, wherein the datacenter comprises the first and second memory pools and wherein the network interface device is to reduce data access times from a memory pool to the computing platform by migration of the data from the first memory pool to the second memory pool.
Example 18 includes one or more examples, and includes a method comprising: at a switch, configured to manage accesses to a first range of memory addresses in a first memory pool: selectively migrating data of the first range of memory addresses in the first memory pool to a second memory pool to reduce transit time of the data to a computing platform.
Example 19 includes one or more examples, wherein the selectively migrating data of the first range of memory addresses in the first memory pool to a second memory pool to reduce transit time of the data to a computing platform is based at least, in part, on one or more of: (a) memory bandwidth used to access the data; (b) latency to access the data from the first memory pool by the computing platform; (c) number of accesses to the data over a window of time by the computing platform; (d) number of accesses to the data over a window of time by other computing platforms over a window of time; (e) historic congestion to and/or from one or more memory pools accessible to the computing platform; and/or (f) number of different computing platforms that access the data.
Example 20 includes one or more examples, wherein the selectively migrating data of the first range of memory addresses in the first memory pool to a second memory pool to reduce transit time of the data to a computing platform is based at least, in part, on telemetry data indicative of whether a service level agreement (SLA) of the computing platform is met or not met.

## Claims

1. A computer-readable medium comprising instructions stored thereon, that if executed by one or more processors, cause the one or more processors to:
configure a network interface device to monitor accesses to data in a first memory pool and selectively migrate the data to a second memory pool based at least, in part, on a transmission rate of the data to a computing platform.

2. The computer-readable medium of claim 1, wherein the network interface device is to selectively migrate the data to a second memory pool also based at least, in part, on one or more of: (a) memory bandwidth used to access the data; (b) latency to access the data from the first memory pool by the computing platform; (c) number of accesses to the data over a window of time by the computing platform; (d) number of accesses to the data over a window of time by other computing platforms over a window of time; (e) historic congestion to and/or from one or more memory pools accessible to the computing platform; and/or (f) number of different computing platforms that access the data.

3. The computer-readable medium of one of the previous claims, wherein the network interface device is to selectively migrate the data to a second memory pool also based at least, in part, on telemetry data indicative of whether a service level agreement (SLA) of the computing platform is met or not met.

4. The computer-readable medium of one of the previous claims, comprising instructions stored thereon, that if executed by one or more processors, cause the one or more processors to:
configure the network interface device to select the second memory pool based at least in part to reduce a time taken to receive the data at the computing platform compared to a time taken to receive the data at the computing platform from the first memory pool.

5. The computer-readable medium of one of the previous claims, comprising instructions stored thereon, that if executed by one or more processors, cause the one or more processors to:
configure the network interface device to redirect memory access requests for the data to the second memory pool during migration of the data to the second memory pool.

6. The computer-readable medium of any of claims 1-5, wherein the network interface device comprises one or more of: network interface controller (NIC), SmartNIC, forwarding element, switch, infrastructure processing unit (IPU), or data processing unit (DPU).

7. An apparatus comprising:
a network interface device, when operational, configured to:
select data of a region of addressable memory addresses to migrate from a first memory pool to a second memory pool to reduce a time to availability of the data of the region of addressable memory addresses at a computing platform.

8. The apparatus of claim 7, wherein to select data of a region of addressable memory addresses to migrate from a first memory pool to a second memory pool to reduce a time to availability of the data of the region of addressable memory addresses at a computing platform is based at least, in part, on one or more of: (a) memory bandwidth used to access the data; (b) latency to access the data from the first memory pool by the computing platform; (c) number of accesses to the data over a window of time by the computing platform; (d) number of accesses to the data over a window of time by other computing platforms over a window of time; (e) historic congestion to and/or from one or more memory pools accessible to the computing platform; and/or (f) number of different computing platforms that access the data.

9. The apparatus of one of the claims 7-8, wherein to select data of a region of addressable memory addresses to migrate from a first memory pool to a second memory pool to reduce a time to availability of the data of the region of addressable memory addresses at a computing platform, the network interface device is based at least, in part, on telemetry data indicative of whether a service level agreement (SLA) of the computing platform is met or not met.

10. The apparatus of one of the claims 7-9, wherein
the network interface device, when operational, is to redirect memory access requests for the data to the second memory pool during migration of the data to the second memory pool.

11. The apparatus of one of the claims 7-10, wherein the network interface device comprises one or more of: network interface controller (NIC), SmartNIC, forwarding element, switch, infrastructure processing unit (IPU), or data processing unit (DPU).

12. The apparatus of one of the claims 7-11, comprising a server to configure the network interface device to perform the select data of a region of addressable memory addresses to migrate from a first memory pool to a second memory pool to lower a transit time of the data of the region of addressable memory addresses to a computing platform.

13. The apparatus of any of claims 7-12, comprising a datacenter, wherein the datacenter comprises the first and second memory pools and wherein the network interface device is to reduce data access times from a memory pool to the computing platform by migration of the data from the first memory pool to the second memory pool.

14. A method comprising:
at a switch, configured to manage accesses to a first range of memory addresses in a first memory pool:
selectively migrating data of the first range of memory addresses in the first memory pool to a second memory pool to reduce a time to availability of the data at a computing platform.

15. The method of claim 14, wherein the selectively migrating data of the first range of memory addresses in the first memory pool to a second memory pool to reduce a time to availability of the data at a computing platform is based at least, in part, on one or more of: (a) memory bandwidth used to access the data; (b) latency to access the data from the first memory pool by the computing platform; (c) number of accesses to the data over a window of time by the computing platform; (d) number of accesses to the data over a window of time by other computing platforms over a window of time; (e) historic congestion to and/or from one or more memory pools accessible to the computing platform; and/or (f) number of different computing platforms that access the data.
